(19) Europäisches Patentamt
European Patent Office
Office européen des brevets

(11) **EP 3 498 002 B1**

(12) **EUROPEAN PATENT SPECIFICATION**

(45) Date of publication and mention
of the grant of the patent:
**08.11.2023 Bulletin 2023/45**

(21) Application number: **17739815.3**

(22) Date of filing: **30.06.2017**

(51) International Patent Classification (IPC):
**H04W 72/21** *(2023.01)* **H04W 28/06** *(2009.01)*

(52) Cooperative Patent Classification (CPC):
**H04W 72/21; H04W 28/06**

(86) International application number:
**PCT/US2017/040337**

(87) International publication number:
**WO 2018/031143 (15.02.2018 Gazette 2018/07)**

(54) **BUFFER STATUS REPORTING METHODS AND PROCEDURES**

PUFFERSTATUSMELDUNGSVERFAHREN UND VORGEHENSWEISEN

PROCÉDÉS ET PROCÉDURES DE SORTIE D'ÉTAT DE TAMPON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2016 US 201662372915 P**

(43) Date of publication of application:
**19.06.2019 Bulletin 2019/25**

(73) Proprietor: **Apple Inc.**
**Cupertino, CA 95014 (US)**

(72) Inventors:
• **PHUYAL, Umesh**
**Beaverton, Oregon 97006 (US)**
• **SHRESTHA, Bharat**
**Hillsboro, Oregon 97124 (US)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**EP-A1- 3 001 755 WO-A1-2009/088334**
**WO-A1-2010/043963**

**Description**

**BACKGROUND**

Wireless systems typically include one or more User Equipment (UE) devices communicatively coupled to one or more Base Stations (BS). The one or more BSs may be Long Term Evolved (LTE) evolved NodeBs (eNB) or New Radio (NR) next generation NodeBs (gNB) that can be communicatively coupled to one or more UEs by a Third-Generation Partnership Project (3GPP) network. The UE can be one or more of a smart phone, a tablet computing device, a laptop computer, an Internet of Things (IoT) device, and/or another type of computing devices that is configured to provide digital communications. As used herein, digital communications can include data and/or voice communications, as well as control information.

With a finite amount of network resources and a multitude of UEs of various types on the network, it is important to efficiently manage the allocation and use of resources. The 3GPP network can utilize a Media Access Control (MAC) to manage communications between a large number and variety of UE devices and one or more BS of the network. The Buffer Status Report (BSR), included in the MAC, provides information to the serving BS about the amount of data available in the uplink (UL) buffers of the UE for transmission to the BS. In response to the BSR, the BS allocates an according amount of an UL grant if the Physical Uplink Shared Channel (PUSCH) resource is available. Therefore, UL resources can be allocated when a particular UE has something to transmit, and avoids allocating resources when the UE has nothing to transmit.

Document EP 3 001 755 A1 relates to a method performed at a user equipment of requesting resource from a network node within a wireless network for transmitting uplink data, the uplink data being data that is to be transmitted as a direct communication directly between the user equipment and user equipment within at least one of a plurality of groups of user equipment of which the user equipment is a member. The method comprises: generating a status report the status report providing an indication of an amount of the uplink data and an indication of at least one group to which the uplink data is to be transmitted; transmitting an indication of a priority of the at least one group towards the network node; and transmitting the status report towards the network node.

Document WO 2010/043 963 A1 relates to a method and a mobile terminal providing priority-based uplink scheduling information.

Document WO 2009/088 334 A1 relates to compressed buffer status reports in LTE.

The invention provides apparatuses of a user equipment and of base stations according to the independent claims. Further embodiments are provided in the dependent claims. The embodiments and/or examples disclosed in the following description which are not covered by the appended claims are considered as not being part of the present invention. However, they may be useful for illustrating and understanding the invention.

**BRIEF DESCRIPTION OF THE DRAWINGS**

Features and advantages of the disclosure will be apparent from the detailed description which follows, taken in conjunction with the accompanying drawings, which together illustrate, by way of example, features of the disclosure; and, wherein:

FIG. 1 depicts a wireless system, in accordance with an example;
FIGS. 2A and 2B illustrate short and long BSRs for PUSCH communications;
FIGS. 3A and 3B illustrate short and long BSRs for PSSCH communications;
FIG. 4 illustrates a system including a Base Station (BS) and a User Equipment (UE) in accordance with an example;
FIGS. 5A and 5B depict variable Buffer Status Reports (BSRs) implemented between the UE and BS in accordance with an example;
FIGS. 6A and 6B depict a BSR in accordance with an example;
FIGS. 7A and 7B depict a BSR in accordance with another example;
FIGS. 8A and 8B illustrates a data structure mapping a plurality of Quality of Service (QoS) classes, corresponding priority classes, corresponding buffer sizes, and corresponding radio bearers in accordance with an example;
FIGS. 9A and 9B depict variable BSR technique implemented by the UE in accordance with another example;
FIGS. 10A and 10B depicts a BSR in accordance with another example;
FIGS. 11A and 11B depict variable BSRs implemented between the UE and BS in accordance with yet another example;
FIGS. 12A and 12B depict a BSR in accordance with an example;
FIG. 13 illustrates an architecture of a wireless network with various components of the network in accordance with some embodiments;
FIG. 14 illustrates example components of a device in accordance with some embodiments;

FIG. 15 illustrates example interfaces of baseband circuitry in accordance with some embodiments;
FIG. 16 is an illustration of a control plane protocol stack in accordance with some embodiments;
FIG. 17 is an illustration of a user plane protocol stack in accordance with some embodiments;
FIG. 18 illustrates components of a core network in accordance with some embodiments; and
FIG. 19 is a block diagram illustrating components, according to some example embodiments, able to read instructions from a machine-readable or computer-readable medium (e.g., a non-transitory machine-readable storage medium) and perform any one or more of the methodologies discussed herein in accordance with an example.

Reference will now be made to the exemplary embodiments illustrated, and specific language will be used herein to describe the same. It will nevertheless be understood that no limitation of the scope of the technology is thereby intended.

## DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

## DEFINITIONS

As used herein, the term "User Equipment (UE)" refers to a computing device capable of wireless digital communication such as a smart phone, a tablet computing device, a laptop computer, a multimedia device such as an iPod Touch®, or other type computing device that provides text or voice communication. The term "User Equipment (UE)" may also be refer to as a "mobile device," "wireless device," of "wireless mobile device."
As used herein, the term "wireless access point" or "Wireless Local Area Network Access Point (WLAN-AP)" refers to a device or configured node on a network that allows wireless capable devices and wired networks to connect through a wireless standard, including WiFi, Bluetooth, or other wireless communication protocol.
As used herein, the term "Base Station (BS)" includes "Base Transceiver Stations (BTS)," "NodeBs," "evolved NodeBs (eNodeB or eNB)," and/or "next generation NodeBs (gNodeB or gNB)," and refers to a device or configured node of a mobile phone network that communicates wirelessly with UEs.
As used herein, the term "cellular telephone network," "4G cellular," "Long Term Evolved (LTE)," "5G cellular" and/or "New Radio (NR)" refers to wireless broadband technology developed by the Third Generation Partnership Project (3 GPP), and will be referred to herein simply as "New Radio (NR)."

EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.
The underlying problem of the present invention is solved by the independent claims.
The term 'code' is used herein to refer to one or more processes of converting/manipulating/formatting information (electronic data) into a coded message. The information is converted into a coded message according to a standard format/standard/
The term 'encoded' is used herein to refer to one or more processes of converting/manipulating a coded message into electrical signals, and optionally from electrical signals to electromagnetic radiation signals.

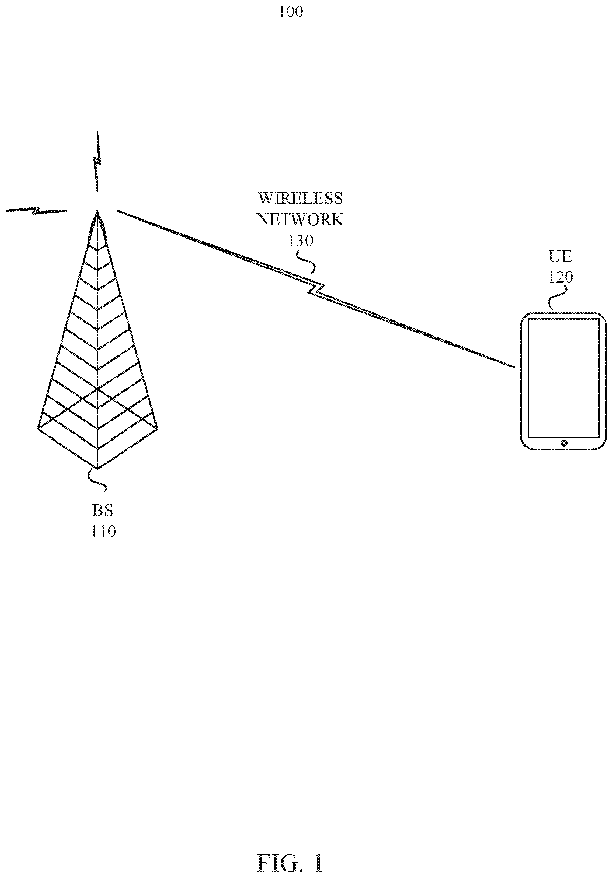

FIG. 1 depicts a wireless system, in accordance with an example. In one aspect, the wireless system 100 includes one or more Base Stations (BS) 110 and one or more User Equipment (UE) devices 120 that can be communicatively coupled by a wireless communication protocol. In one instance, the one or more BSs may be Long Term Evolved (LTE) evolved NodeBs (eNB) and/or next generation NodeBs (gNB) that can be communicatively coupled to one or more UEs by a Third-Generation Partnership Project (3GPP) network. In one instance, the UE can be one or more of a smart phone, a tablet computing device, a laptop computer, an Internet of Things (IoT) device, and/or another type of computing devices that is configured to provide digital communications. As used herein, digital communications can include data and/or voice communications, as well as control information. Media Access Control (MAC) Protocol Data Units (PDUs) can be used to facilitate the communications on such 3GPP networks. For communications on the Physical Uplink Shared Channel (PUSCH), Buffer Status Reports (BSR) in Control Elements (CE) of the MAC can be used to indicate that a UE has data to transmit to a BS.

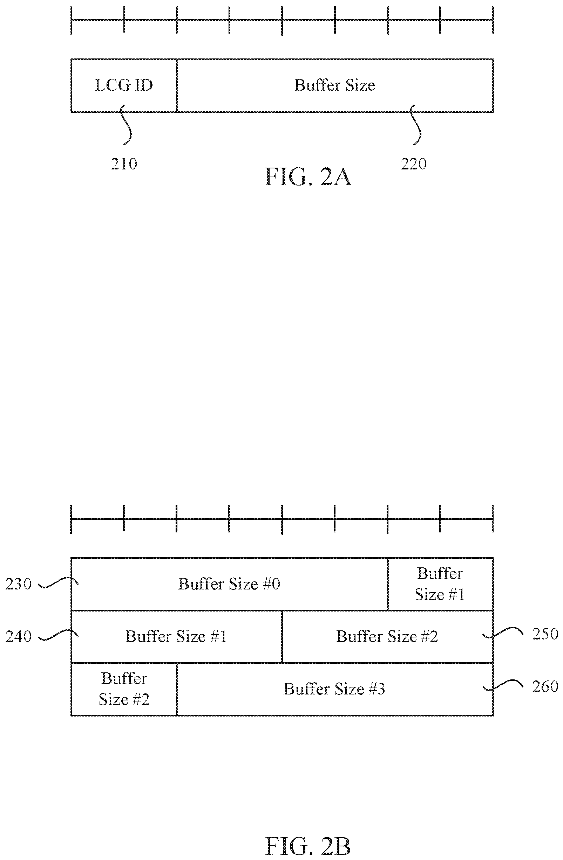

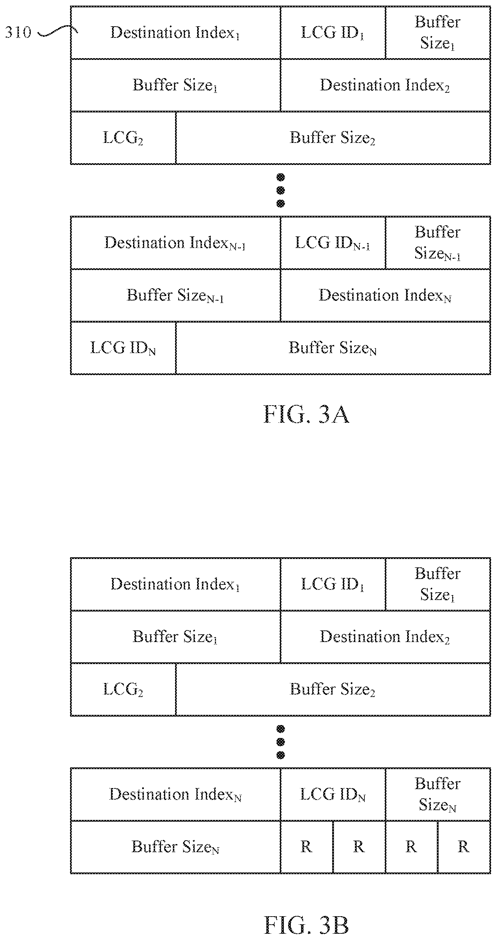

The MAC can support up to eleven logical channels, including three Signal Radio Bearers (SRBs) and eight Data Radio Bearers (DRBs), per UE. The eleven logical channels can be grouped into four logical channel groups (LCGs) according to the priority. The MAC CE can be identified by a logical channel index in a header of the MAC. The conventional MAC CE can include two types of BSRs, short BSRs and long BSRs. FIGS. 2A and 2B illustrate short and long BSRs for PUSCH communications, respectively. The short BSR includes an LCG ID field 210 and a buffer size field 220, as illustrated in FIG. 2A. The LCG ID field 210, in the short BSR, can include two bits to indicate one of four LCGs (0 to 3) for which the buffer status size is being reported in the six-bit buffer status field 220. The long BSR includes four buffer size fields 230-260, as illustrated in FIG. 2B. The buffer status size of four LCGs (0 through 4) are reported in each respective six-bit buffer status field 230-260. Similarly, short and long BSRs for Physical Sidelink Shared Channel (PSSCH) communications, respectively, are illustrated in FIGS. 3A and 3B. The sidelink BSR mechanism can report BSRs corresponding to N destination indices 310.

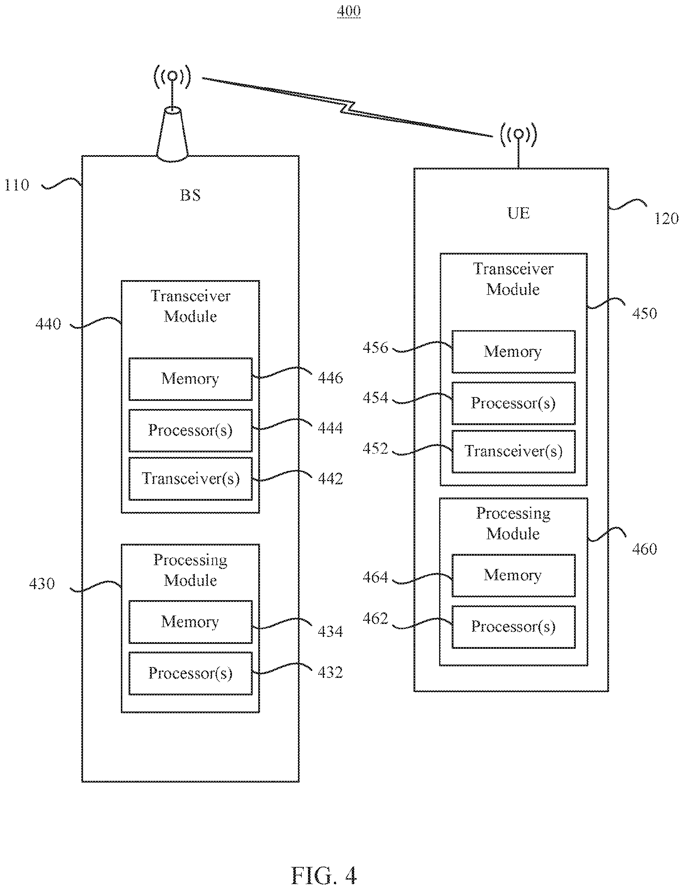

FIG. 4 illustrates a system 400 including a BS 110 and a UE 120 in accordance with an example. The BS 110 can be configured to communicate wirelessly with the UE 120. The BS 110 can include a processing module 430 and a transceiver module 440. The processing module 430 can include one or more processors 432 and memory 434. In one embodiment, the processing module 430 can include one or more application processors. The transceiver module 440 can include a transceiver 442, one or more processors 444 and memory 446. In one embodiment, the transceiver module 440 can include a baseband processor.

The UE 120 can include a transceiver module 450 and a processing module 460. The processing module 460 can include one or more processors 462 and memory 464. In one embodiment, the processing module 460 can include one or more application processors. The transceiver module 450 can include a transceiver 452, one or more processors 454 and memory 456. In one embodiment, the transceiver module 450 can include a baseband processor.

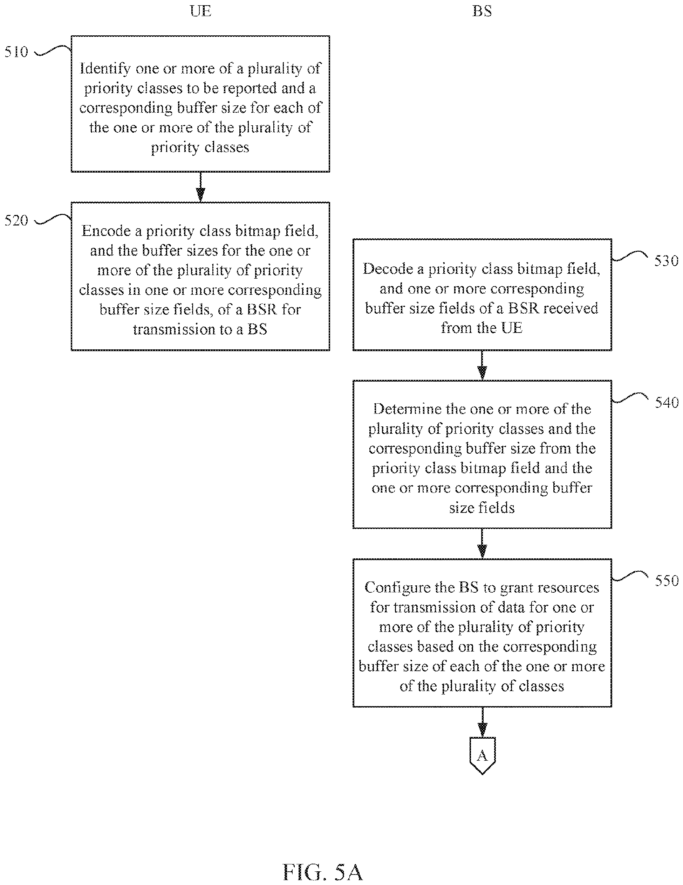

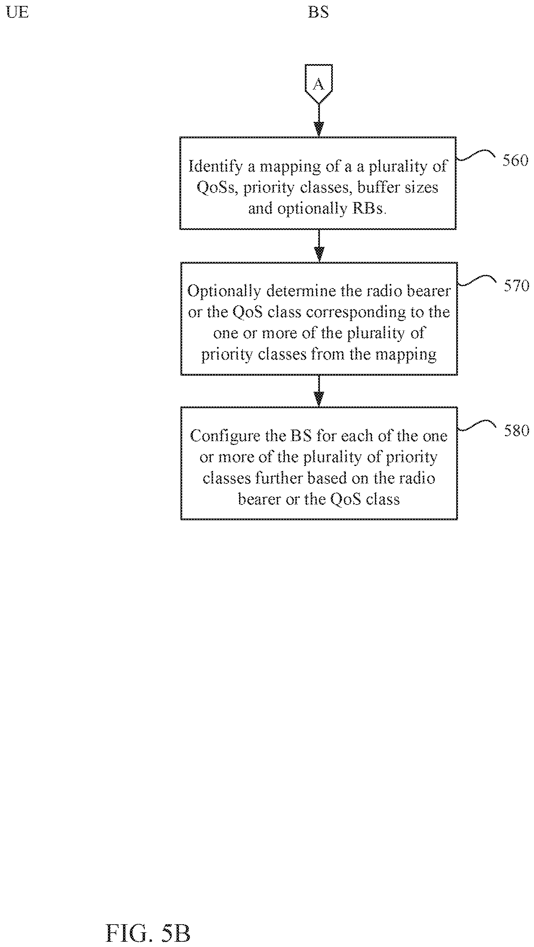

FIGS. 5A and 5B depict variable BSRs implemented between the UE and BS in accordance with an example. In one aspect, one or more processors of the UE can be configured to identify one or more of a plurality of priority classes to be reported and a corresponding buffer size for each of the one or more of the priority classes 510. The one or more processors can also be configured to encode a priority class bitmap field, and the buffer sizes for the one or more of the plurality of priority classes in one or more corresponding buffer size fields, of a BSR for transmission to a BS 520. In one aspect, encoding the BSR can further include one or more padding bits to octet-align the BSR.

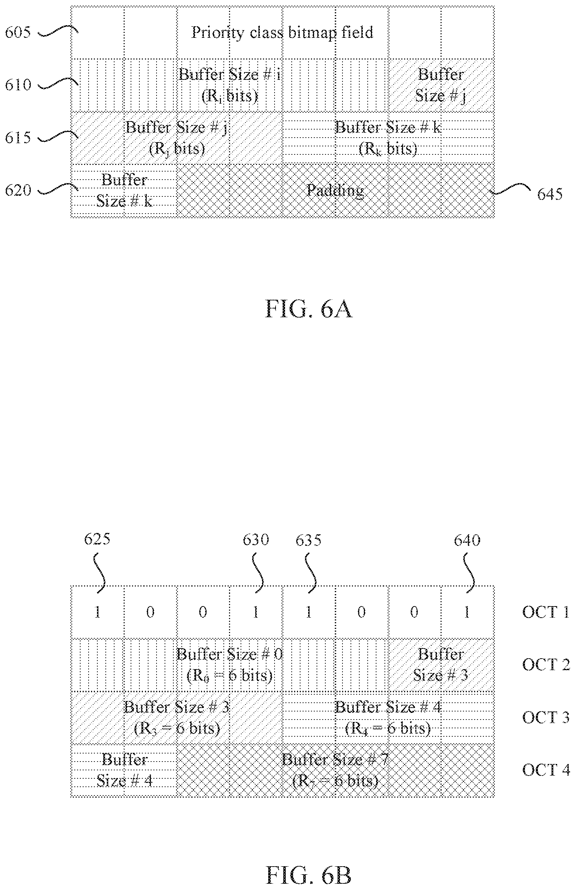

FIGS. 6A and 6B depicts a BSR in accordance with an example. In one aspect, the priority class bitmap field 610 can include a plurality (N) of contiguous bits, wherein each bit of the priority class bitmap field 605 corresponding to a respective one of the plurality of priority classes. Each bit of the priority class bitmap field 605 set to a first state indicates that the buffer size field 610-620 for the corresponding one of the one or more of the plurality of priority classes is included in the BSR. On the other hand, each bit of the priority class bitmap field 605 set to a second state indicates that the buffer size field for the corresponding one of the one or more of the plurality of priority classes does not follow the given bit of the priority class bitmap field. For example, as illustrated in FIG. 6B, the $0^{th}$ 625, $3^{rd}$ 630, $4^{th}$ 635 and $7^{th}$ 640 bit positions of the priority class bitmap field 605 are set to ' 1' indicating that the buffer size fields for the $0^{th}$, $3^{rd}$, $4^{th}$ and $7^{th}$ priority classes are included.

In one aspect, the size of the priority class bitmap field can include a plurality (N) of bits to report the one or more buffer size fields corresponding to the one or more of the plurality (N) of logical channel identifiers (LCIDs). In one aspect, each buffer size field can be a plurality (R) of bits. The BSR therefore can include an LCID bitmap field followed by the indicated buffer size fields. The LCID bitmap field, which can be N-bits long, determines the logical channels among N logical channels for which buffer size fields are being reported The appropriate value of N for the size of LCID bitmap field can be defined to support up to N logical channels. As illustrated in FIGS. 6A and 6B, buffer sizes for LCID $i$, $j$ and $k$ are selectively being reported. In such case, the $i^{th}$, $j^{ih}$ and $k^{th}$ position of the LCID bitmap filed can be set to '1.' Depending upon the number of buffer sizes reported, some padding bits 645 may be included for octet-alignment in the BSR.

In another aspect, the size of the priority class bitmap field can include a plurality (G) of bits to report the one or more buffer size fields corresponding to the one or more of the plurality (G) of LCG IDs. Again, each buffer size field can be a plurality (R) of bits. The BSR therefore can include an LCG ID bitmap field followed by the indicated buffer size fields. The LCID bitmap field, which can be G-bits long, determines the logical channels among G logical channel groups for which buffer size fields are being reported. The appropriate value of G for the size of LCG ID bitmap field can be defined to support up to G logical channel groups. As illustrated in FIGS. 6A and 6B, buffer sizes for LCG ID $i$, $j$ and $k$ are selectively being reported. The length G of the LCID bitmap field can for example be 8 bits. In such case, the $i^{th}$, $j^{th}$ and $k^{th}$ position of the LCG ID bitmap filed can be set to '1.' Depending upon the number of buffer sizes reported, some padding bits may be included for octet-alignment in the BSR.

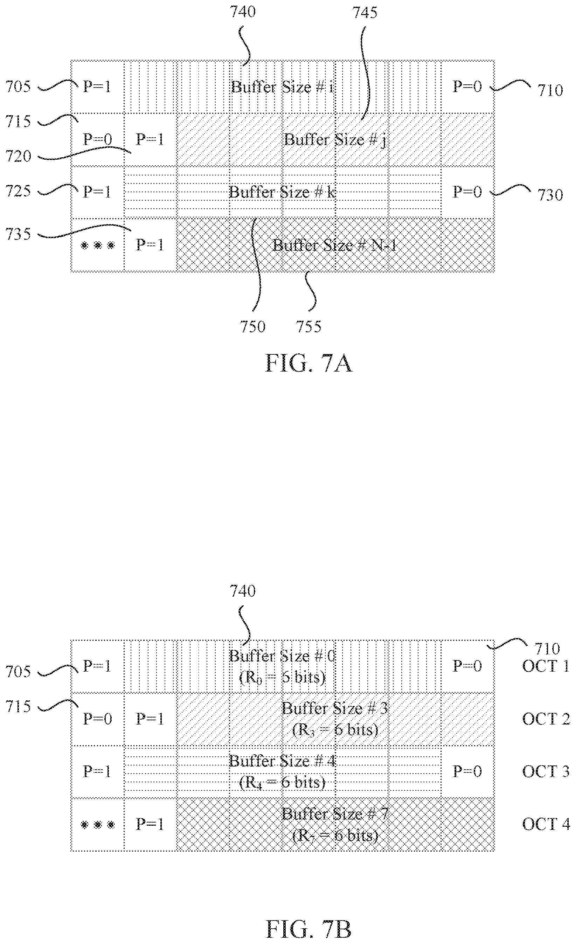

FIGS. 7A and 7B depicts a BSR in accordance with another example. In one aspect, the priority class bitmap field 705-735 of the BSR can include a plurality (N) of bits, wherein each bit of the priority class bitmap field corresponding to a respective one of the plurality (N) of priority classes. Each bit of the priority class bitmap field set to a first state 705, 720, 725, 735 indicates that the buffer size field 740 for the corresponding one of the one or more of the plurality of priority classes follows the given bit of the priority class bitmap field 740-755. On the other hand, each bit of the priority class bitmap field set to a second state 710, 715, 730 indicates that the buffer size field for the corresponding one of the one or more of the plurality of priority classes does not follow the given bit of the priority class bitmap field. For example, as illustrated in FIG. 7B, the $0^{th}$ bit of the priority class bitmap field 705 may be set to '1' indicating that the buffer size field 740 for the $0^{th}$ priority class follows the $0^{th}$ bit of the priority class bitmap field 705. The $1^{st}$ bit of the priority class bitmap field 710 may be set to '0' indicating that the buffer size field of the $1^{st}$ priority class does not follow, instead the $2^{nd}$ bit of the priority class bitmap field 715 would follow.

In one aspect, the size of the priority class bitmap field can include a plurality (N) of bits to report the one or more buffer size fields corresponding to the one or more of the plurality (N) of LCIDs. In one aspect, each buffer size field can be a plurality (R) of bits. The BSR therefore can include an LCID bitmap field split into a non-contiguous field. Each presence bit (P) is followed by a buffer size field if set to a first state, and is not followed by a buffer size field if set to a second state. For example, when a given presence bit (P) is set to '1,' a buffer size field for the corresponding LCID follows. If the presence bit (P) is set to '0.' the buffer size field of the corresponding LCID is not included. If there is another LCID buffer size field to report, another presence bit (P) and corresponding buffer size field will follow a buffer size field of the previous LCID or a presence bit (P) set to "0." The number of presence bits of the non-contiguous LCID bitmap field can be equal to the total number of logical channels supported by the MAC. As illustrated in FIGS. 7A and 7B, buffer sizes for LCID $i$, $j$, $k$ and $n$-1 are selectively being reported. For example, if there are a total of 8 logical channel and the buffer status size for logical channels 0, 3, 4 and 7 are being reported using 6-bit buffer size fields, the BSR can be encoded in 4 bytes. In such case, the $i^{th}$, $j^{th}$ and $k^{th}$ position of the LCID bitmap filed can be set to ' 1.'

In another aspect, the size of the priority class bitmap field can include a plurality (G) of bits to report the one or more buffer size fields corresponding to the one or more of the plurality (G) of LCG IDs. Again, each buffer size field can be a plurality (R) of bits. The BSR therefore can include an LCG ID bitmap field split into a non-contiguous field. Each presence bit (P) is followed by a buffer size field if set to a first state, and is not followed by a buffer size field if set to a second state. For example, when a given presence bit (P) is set to '1,' a buffer size field for the corresponding LCG ID follows. If the presence bit (P) is set to '0.' the buffer size field of the corresponding LCG ID is not included. If there is another LCG ID buffer size field to report, another presence bit (P) and corresponding buffer size field will follow a buffer size field of the previous LCG ID or a presence bit (P) set to "0." The number of presence bits of the non-contiguous LCG ID bitmap field can be equal to the total number of logical channels supported by the MAC. As illustrated in FIGS. 7A and 7B, buffer sizes for LCGID $i$, $j$, $k$ and $n$-1 are selectively being reported. For example, if there are a total of 8 logical channel groups and the buffer status size for logical channel groups 0, 3, 4 and 7 are being reported using 6-bit buffer size fields, the BSR can be encoded in 4 bytes. In such case, the $i^{th}$, $j^{th}$ and $k^{th}$ position of the LCID bitmap filed can be set to '1.'

Referring again to FIG. 5, the one or more processors of the BS, in one aspect, can be configured to decode a priority class bitmap field, and one or more corresponding buffer size fields of a BSR received from a UE 530. The one or more processors can also be configured to determine the one or more of the plurality of priority classes and the corresponding buffer size from the priority class bitmap field and the one or more corresponding buffer size fields 540. The BS can be configured to grant resources for transmission of data for the one or more of the plurality of priority classes based on the corresponding buffer size of each of the one or more of the plurality of priority classes 550.

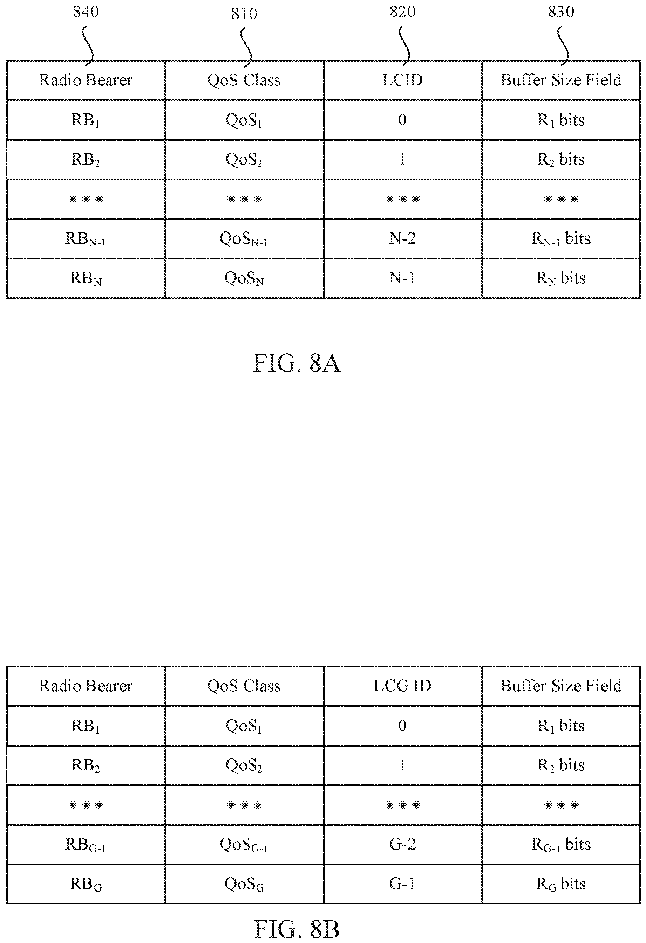

In one aspect, the one or more processors of the BS can be further configured to identify a mapping 560 of a plurality of Quality of Service (QoS) classes 810, corresponding priority classes 820, corresponding buffer sizes 830, and optionally corresponding radio bearers 840. In one aspect, the mapping can include a data structure including an indication of a QoS class and an indication of a buffer size field, for each of one or more LCIDs, as illustrated in FIGS. 8A. The mapping may also include an indication of a radio bearer (RB) for each of the LCIDs. In another aspect, the mapping can include a data structure including an indication of a QoS class and an indication of a buffer size field, for each of one or more LCG IDs, as illustrated in FIGS. 8B. Again, the mapping may also include an indication of a radio bearer (RB) for each of the LCIDs. The one or more processor can also be configured to determine the radio bearer or the QoS class corresponding to the one or more of the plurality of priority classes from the mapping 570. The BS can be configured for each of the one or more of the plurality of priority classes further based on the radio bearer or the QoS class 580. In one instance, the BS can be configured to perform prioritization between UEs as well as between radio bearers associated with different LCGs.

In one aspect, the plurality of priority classes can comprise a plurality of radio bearers (RB), and the priority class bitmap field comprises a RB bitmap field. In one implementation, the plurality of RBs comprises a plurality of signal radio bearers (SRB), and the RB bitmap field comprises a SRB bitmap field. In another implementation, the plurality of RBs comprises a plurality of signal radio bearer (SRB) groups, and the RB bitmap field comprises a SRB group bitmap field. In another implementation, the plurality of RB comprises a plurality of data radio bearers (DRB), and the RB bitmap field comprises a DRB bitmap field. In yet another implementation, the plurality of RB comprises a plurality of data radio bearer (DRB) groups, and the RB bitmap field comprises a DRB group bitmap field. In other aspects, the plurality of priority classes can identify other traffic bearers and/or flows.

In one aspect, the size of the BSR can be based on a number of bits of the priority class bitmap field set to the first state. In one aspect, the size of the BSR can be indicated in a header or a sub-header of a mobile access control (MAC) packet.

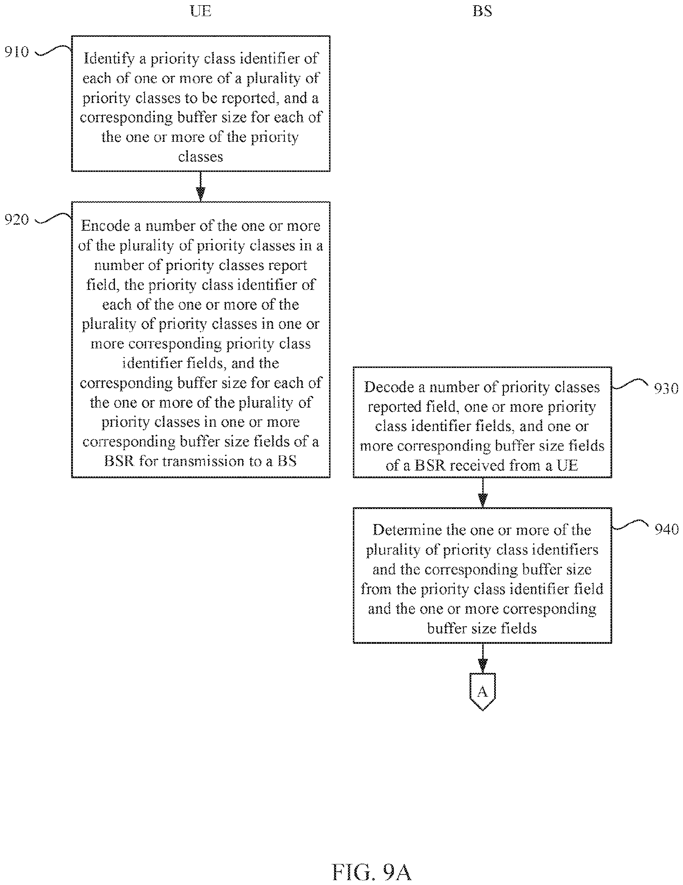

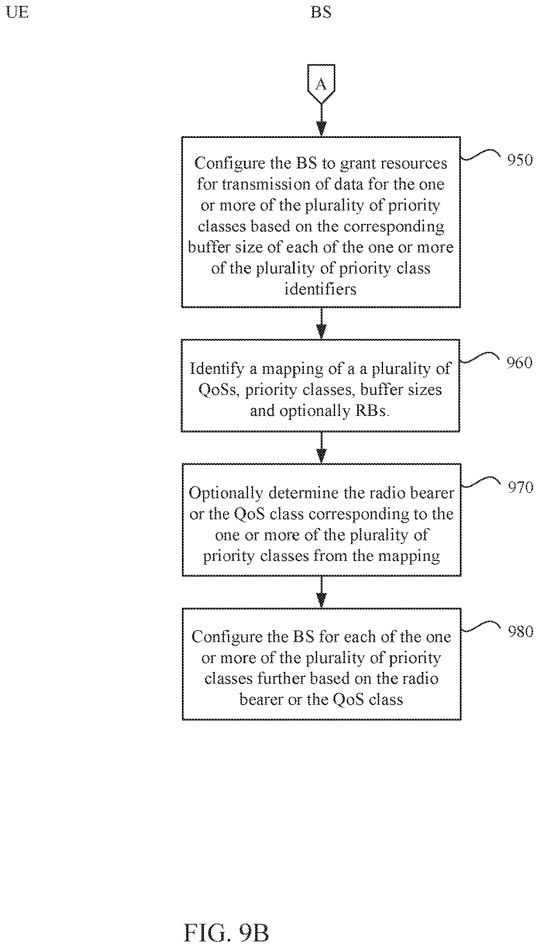

FIG 9 depicts variable BSR technique implemented by the UE in accordance with another example. In one aspect, one or more processors of the UE can be configured to identify a priority class identifier of each of one or more of the plurality of priority classes to be reported, and a corresponding buffer size for each of the one or more of the priority classes 910. The one or more processors can also be configured to encode a number of the one or more of the plurality of priority classes in a number of priority classes report field, the priority class identifier of each of the one or more of the plurality of priority classes in one or more corresponding priority class identifier fields, and the corresponding buffer size for each of the one or more of the plurality of priority classes in one or more corresponding buffer size fields of a BSR for transmission to a BS. In one aspect, encoding the BSR can further include one or more padding bits to octet-align the BSR.

The buffer size can be reported using a combination of priority class identifiers followed by corresponding buffer size fields. The additional number of priority classes reported field can be used to indicate the number of priority class identifier buffer sizes being reported in the CE. In one example, the priority classes reported field and the priority class identifier fields can each be x bits in length. The value of x depends on the number of logical channels (N) supported by the MAC, in accordance with Equation 1.

$$x = \mathrm{ceil}\,(\log 2\,(\text{number of logical channels N}) \qquad (1)$$

This allows reporting all N logical channels on one BSR. In another example, the size of the priority classes reported field can be less than x bits, which provides for reporting a subset of logical channels at a time with reduced overhead.

In one aspect, the size of the number of priority classes report field is equal the logarithm base two of the plurality (N) of priority classes of bits for reporting up to each of the plurality (N) of the priority classes. In another aspect, the size of the number of priority classes report field is less than the logarithm base two of the plurality (N) of priority classes of bits for reporting a subset of the plurality of (N) of the priority classes.

In one aspect, the number of the one or more of the plurality of priority classes is indicated in a sub-header of a mobile access control (MAC) packet. In one aspect, the number of the one or more of the plurality of priority classes is based on a size of the BSR indicated in a header or a sub-header of a mobile access control (MAC) packet.

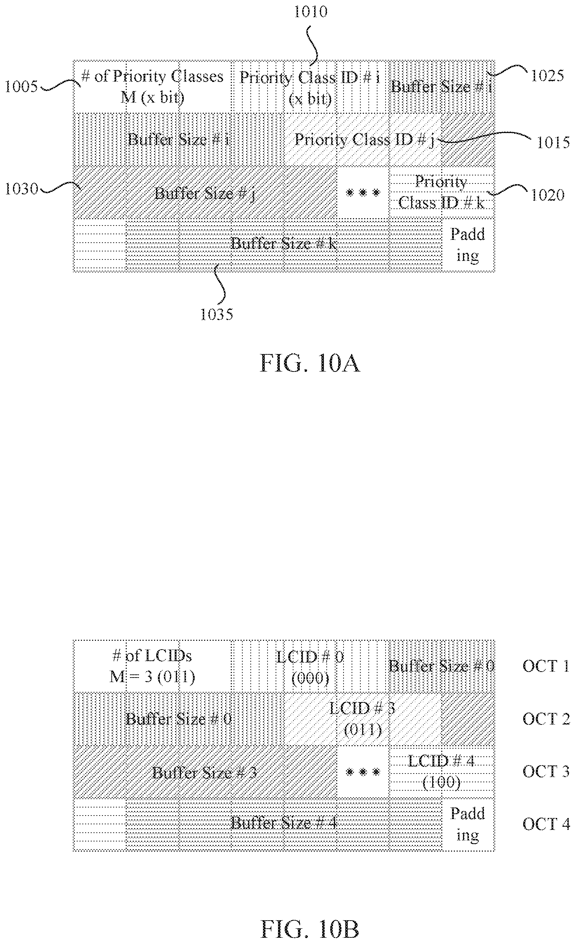

FIGS. 10A and 10B depicts a Buffer Status Report (BSR) in accordance with another example. In one aspect, the number of priority classes reported field 1005 of the BSR can include a plurality (X) of contiguous bits indicating the number of priority class identifier fields 1010-1020 and corresponding buffer size fields 1025-1035 encoded in the BSR. In one aspect, the priority class identifier fields 1010-1020 can include a plurality (X) of bits including a priority class identifier. In one aspect, each buffer size field 1025-1035 can be a plurality (R) of bits.

In one aspect, the priority class identifier field can include a plurality (x) of bits indicating a respective logical channel identifier (LCID). In one aspect, each buffer size field can be a plurality (R) of bits indicating a buffer size of a corresponding LCID. As illustrated in FIG. 10B, an exemplary value (011) in the number of LCIDs reported field may indicate that the BSR includes three LCIDs and corresponding buffer sizes. A first LCID field and buffer size field may indicate a $0^{th}$ LCID and corresponding buffer size for the $0^{th}$ LCID. A second LCID field and buffer size field may indicate a $3^{rd}$ LCID and corresponding buffer size for the $3^{rd}$ LCID. A third LCID filed and buffer size field may indicate a $4^{th}$ LCID and corresponding buffer size for the $4^{th}$ LCID. In the illustrated example, the number of LCIDs reported field includes three bits for encoding a plurality (N) of logical channels in one BSR. The LCIDs and corresponding buffer sizes can be reported in 4 bytes. Depending upon the number of buffer sizes reported, some padding bits may be included for octet-alignment in the BSR.

In another aspect, the priority class identifier field can include a plurality (x) of bits indicating a respective logical channel group identifier (LCG ID). In one aspect, each buffer size field can be a plurality (R) of bits indicating a buffer size of a corresponding LCG ID. An exemplary value in the number of LCG IDs reported field may indicate that the BSR includes three LCG IDs and corresponding buffer size. A first LCG ID field and buffer size field may indicate a $0^{th}$ LCG ID and corresponding buffer size for the $0^{th}$ LCG ID. A second LCG ID field and buffer size field may indicate a $3^{rd}$ LCG ID and corresponding buffer size for the $3^{rd}$ LCG ID. A third LCG ID filed and buffer size field may indicate a $4^{th}$ LCG ID and corresponding buffer size for the $4^{th}$ LCG ID. Depending upon the number of buffer sizes reported, some bits may be included for octet-alignment in the BSR.

Referring again to FIG. 9, the one or more processors of the BS, in one aspect, can be configured to decode a number of priority classes reported field, one or more priority class identifier fields, and one or more corresponding buffer size fields of a BSR received from a UE 930. The one or more processors can also be configured to determine the one or more of the plurality of priority class identifiers and the corresponding buffer size from the priority class identifier field and the one or more corresponding buffer size fields 940. The BS can be configured to grant resources for the transmission of data for each of the one or more of the plurality of priority classes based on the corresponding buffer size of each of the one or more of the plurality of priority class identifiers 950.

In one aspect, the one or more processors of the BS can be further configured to identify a mapping 960 of a plurality of Quality of Service (QoS) classes 810, corresponding priority classes 820, corresponding buffer sizes 830, and optionally corresponding radio bearers 840. In one aspect, the mapping can include a data structure including an indication of a QoS class and an indication of a buffer size field, for each of one or more LCIDs, as illustrated in FIGS. 8A. The mapping may also include an indication of a radio bearer (RB) for each of the LCIDs. In another aspect, the mapping can include a data structure including an indication of a QoS class and an indication of a buffer size field, for each of one or more LCG IDs, as illustrated in FIGS. 8B. Again, the mapping may also include an indication of a radio bearer (RB) for each of the LCIDs. The one or more processor can also be configured to determine the radio bearer or the QoS class corresponding to the one or more of the plurality of priority classes from the mapping 970. The BS can be configured for each of the one or more of the plurality of priority classes further based on the radio bearer or the QoS class 980. In one instance, the BS can be configured to perform prioritization between UEs as well as between radio bearers associated with different LCGs.

In one aspect, the plurality of priority classes can comprise a plurality of radio bearers (RB), the number of priority classes report field comprises a number of RBs report field, and the one or more of the priority class identifier fields comprise one or more RB identifier fields. In one implementation, the plurality of RBs comprises a plurality of signal radio bearers (SRB), the number of RBs report field comprises a number of SRBs report field, and the one or more RB identifier fields comprise one or more SRB identifier fields. In another implementation, the plurality of RBs comprises a plurality of signal radio bearer groups (SRBG), the number of RBs report field comprises a number of SRBGs report field, and the one or more RB identifier fields comprise one or more SRBG identifier fields. In another implementation, the plurality of RBs comprise a plurality of data radio bearers (DRB), the number of RBs report field comprises a number of DRBs report field, and the one or more RB identifier fields comprise one or more DRB identifier fields. In yet another implementation, the plurality of RBs comprise a plurality of data radio bearer groups (DRBG), the number of RBs report field comprises a number of DRBGs report field, and the one or more RB identifier fields comprise one or more DRBG identifier fields. In other aspects, the plurality of priority classes can identify other traffic bearers and/or flows.

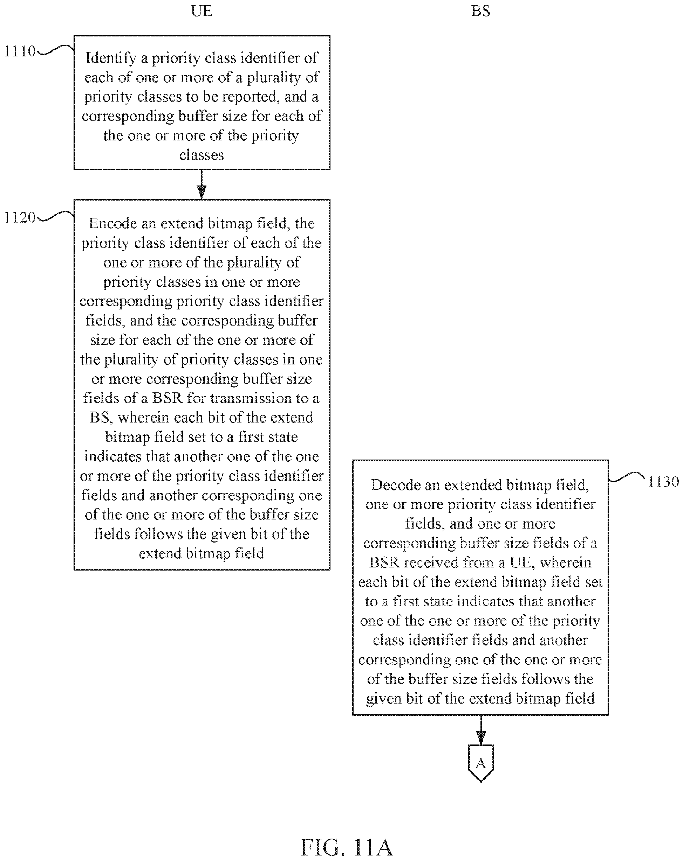

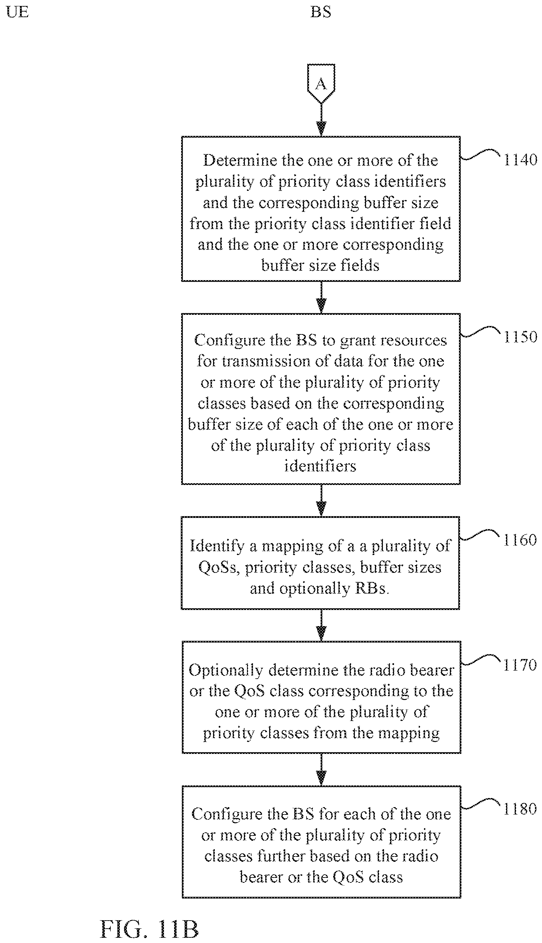

FIG. 11 depicts variable BSRs implemented between the UE and BS in accordance with yet another example. In one aspect, one or more processors of the UE can be configured to identify a priority class identifier of each of one or more of a plurality of priority classes to be reported, and a corresponding buffer size for each of the one or more of the priority classes 1110. The one or more processors can also be configured to encode an extend bitmap field, the priority class identifier of each of the one or more of the plurality of priority classes in one or more corresponding priority class identifier fields, and the corresponding buffer size for each of the one or more of the plurality of priority classes in one or more corresponding buffer size fields of a BSR for transmission to a BS 1120.

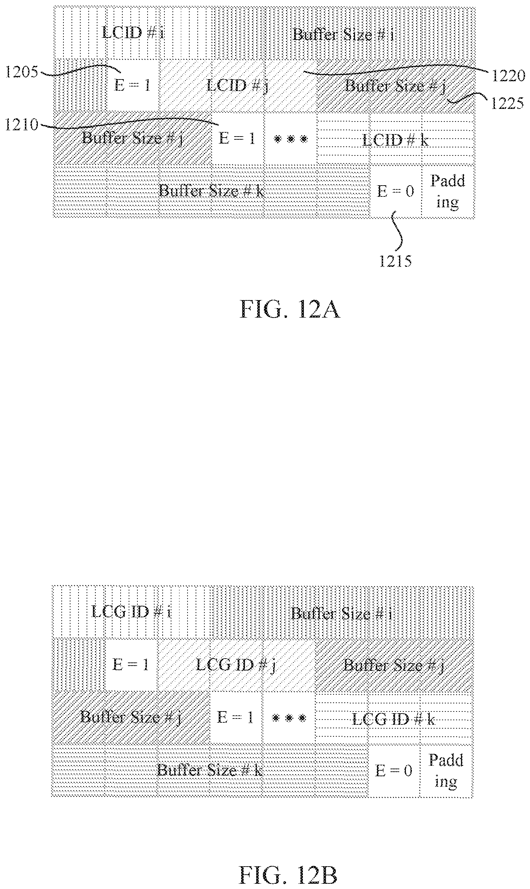

FIG. 12 depicts a Buffer Status Report (BSR) in accordance with an example. In one aspect, the extended bitmap field 1205-1215 of the BSR can include a plurality of (N) bits, wherein each bit of the extended bitmap field corresponds to a respective one of the plurality of (N) of priority classes. Each bit of the extend bitmap field 1205 set to a first state indicates that another one of the one or more of the priority class identifier fields 1220 and another corresponding one of the one or more of the buffer size fields 1225 follows the given bit of the extend bitmap field. Each bit of the extend bitmap field 1215 set to a second state indicates that another one of the one or more of the priority class identifier fields and another corresponding one of the one or more of the buffer size fields does not follow the given bit of the extend bitmap field. Accordingly, one bit, of the non-contiguous extended bitmap field, after each pair of corresponding priority class identifier fields and buffer size fields indicate whether there is another pair of priority class identifier field and buffer size field.

In one aspect, the plurality of priority classes comprise a plurality of logical channels (LC). The number of priority classes report field comprises a number logical channel identifier (LCID) reported field. The one or more of the priority class identifier fields comprise one or more LCID fields. For example, the bit of the extended bitmap field after the $i^{th}$ buffer size field indicates that the next field is a $j^{th}$ LCID field, as illustrated in FIG. 12A. Similarly, the bit of the extended bitmap field after the $k^{th}$ buffer size field indicates that there are no more LCID fields and corresponding buffer size fields. Therefore, logical channel $k$ is the last one being reported in the BSR. Depending on the number of LCID fields and corresponding buffer size fields present, some padding bits may be used for octet-alignment.

In another aspect, the plurality of priority classes comprise a plurality of logical channel groups (LCG). The number of priority classes report field comprises a number of logical channel group identifier (LCGID) report field. The one or more of the priority class identifier fields comprise one or more LCGID fields. For example, the bit of the extended bitmap field after the $i^{th}$ buffer size field indicates that the next field is a $j^{th}$ LCG ID field, as illustrated in FIG. 12B. Similarly, the bit of the extended bitmap field after the $k^{th}$ buffer size field indicates that there are no more LCG ID fields and corresponding buffer size fields. Therefore, logical channel *k* is the last one being reported in the BSR. Depending on the number of LCG ID fields and corresponding buffer size fields present, some padding bits may be used for octet-alignment.

Referring again to FIG. 11, the one or more processors of the BS, in one aspect, can be configured to decode a number of priority classes reported field, one or more priority class identifier fields, and one or more corresponding buffer size fields of a BSR received from a UE 1130. The one or more processors can also be configured to determine the one or more of the plurality of priority class identifiers and the corresponding buffer size from the priority class identifier field and the one or more corresponding buffer size fields 1140. The BS can be configured to transmit data for each of the one or more of the plurality of priority classes based on the corresponding buffer size of each of the one or more of the plurality of priority class identifiers 1150.

In one aspect, the one or more processors of the BS can be further configured to identify a mapping 1160 of a plurality of Quality of Service (QoS) classes 810, corresponding priority classes 820, corresponding buffer sizes 830, and optionally corresponding radio bearers 840. In one aspect, the mapping can include a data structure including an indication of a QoS class and an indication of a buffer size field, for each of one or more LCIDs, as illustrated in FIGS. 8A. The mapping may also include an indication of a radio bearer (RB) for each of the LCIDs. In another aspect, the mapping can include a data structure including an indication of a QoS class and an indication of a buffer size field, for each of one or more LCG IDs, as illustrated in FIGS. 8B. Again, the mapping may also include an indication of a radio bearer (RB) for each of the LCIDs. The one or more processor can also be configured to determine the radio bearer or the QoS class corresponding to the one or more of the plurality of priority classes from the mapping 1170. The BS can be configured for each of the one or more of the plurality of priority classes further based on the radio bearer or the QoS class 1180. In one instance, the BS can be configured to perform prioritization between UEs as well as between radio bearers associated with different LCGs.

In yet another aspect, the plurality of priority classes can comprise a plurality of radio bearers (RB). The number of priority classes report field comprises a number of RBs report field. The one or more of the priority class identifier fields comprise one or more RB identifier fields. In one instance, the plurality of RBs comprises a plurality of signal radio bearers (SRB), the number of RBs report field comprises a number of SRBs report field, and the one or more RB identifier fields comprise one or more SRB identifier fields. In another instance, the plurality of RBs comprises a plurality of signal radio bearer groups (SRBG), the number of RBs report field comprises a number of SRBGs report field, and the one or more RB identifier fields comprise one or more SRBG identifier fields. In another instance, the plurality of RBs comprise a plurality of data radio bearers (DRB), the number of RBs report field comprises a number of DRBs report field, and the one or more RB identifier fields comprise one or more DRB identifier fields. In yet another instance, the plurality of RBs comprise a plurality of data radio bearer groups (DRBG), the number of RBs report field comprises a number of DRBGs report field, and the one or more RB identifier fields comprise one or more DRBG identifier fields. In other aspects, the plurality of priority classes can identify other traffic bearers and/or flows.

The variable size BSR and variable number of BSR reporting mechanisms as described herein can advantageously support numerous use cases and categories, ranging from mobile broadband and massive Machine Type Communication (mMTC) devices, to applications requiring ultra-reliability and low latency. The variable size BSR and variable number of BSR reporting mechanism can advantageous support a variety of use case families for New Radio (NR) communications, including broadband access (e.g., pervasive video), high mobility (e.g., high speed trains), massive IoT (e.g., sensor networks), extreme real-time communications (e.g., tactile internet), lifeline communications (e.g., natural disaster response), ultra-reliable communications (e.g., e-health services), and broadcast services (e.g., news and information). The variable size BSR and variable number of BSR reporting mechanisms can advantageously support more than four priority classes and therefore more than four logical channel groups. The variable size BSR and variable number of BSR reporting mechanisms can also advantageous support Quality of Service (QoS) in a higher precision level. The variable size BSR and variable number of BSR reporting mechanisms advantageously reduce the total size of the BSR MAC CE will supporting a larger group of priority classes.

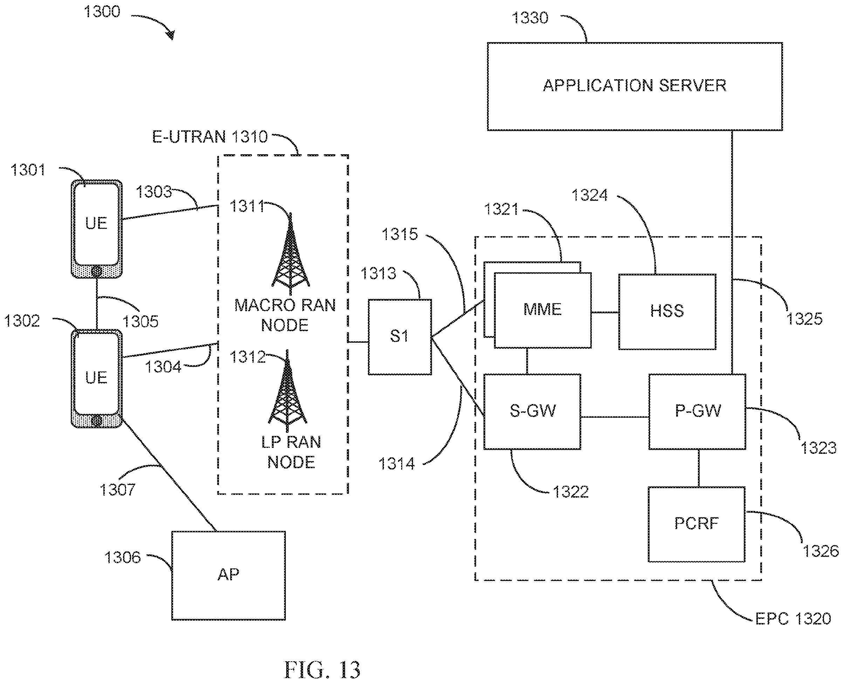

FIG. 13 illustrates an architecture of a wireless network with various components of the network in accordance with some embodiments. A system 1300 is shown to include a user equipment (UE) 1301 and a UE 1302. The UEs 1301 and 1302 are illustrated as smartphones (i.e., handheld touchscreen mobile computing devices connectable to one or more cellular networks), but may also comprise any mobile or non-mobile computing device, such as Personal Data Assistants (PDAs), pagers, laptop computers, desktop computers, wireless handsets, smart meters, remote sensing devices, or any computing device including a wireless communications interface. In some embodiments, any of the UEs 1301 and 1302 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for (machine initiated) exchanging data with an MTC server and/or device via a public land mobile network (PLMN), Proximity-Based Service (ProSe) or device-to-device (D2D) communication, sensor networks, or IoT networks. An IoT network describes interconnecting uniquely identifiable embedded computing devices (within the internet infrastructure) having short-lived connections, in addition to background applications (e.g., keep-alive messages, status updates, etc.) executed by the IoT UE.

The UEs 1301 and 1302 are configured to access a radio access network (RAN) - in this embodiment, an Evolved Universal Mobile Telecommunications System (UMTS) Terrestrial Radio Access Network (E-UTRAN) 1310. The UEs 1301 and 1302 utilize connections 1303 and 1304, respectively, each of which comprises a physical communications interface or layer (discussed in further detail below); in this example, the connections 1303 and 1304 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a 3GPP New Radio (NR) protocol, and the like.

In this embodiment, the UEs 1301 and 1302 may further directly exchange communication data via a ProSe interface 1305. The ProSe interface 1305 may alternatively be referred to as a sidelink interface comprising one or more logical channels, including but not limited to a Physical Sidelink Shared Channel (PSSCH), a Physical Sidelink Shared Channel (PSSCH), a Physical Sidelink Discovery Channel (PSDCH), and a Physical Sidelink Broadcast Channel (PSBCH).

The UE 1302 is shown to be configured to access an access point (AP) 1306 via connection 1307. The connection 1307 can comprise a local wireless connection, such as a connection consistent with any IEEE 802.11 protocol, wherein the AP 1306 would comprise a wireless fidelity (WiFi) router.

The E-UTRAN 1310 can include one or more access points that enable the connections 1303 and 1304. These access points can be referred to as access nodes, base stations (BSs), NodeBs, eNBs, gNBs, RAN nodes, RAN nodes, and so forth, and can comprise ground stations (i.e., terrestrial access points) or satellite access points providing coverage within a geographic area (i.e., a cell). The E-UTRAN 1310 may include one or more RAN nodes 1311 for providing macrocells and one or more RAN nodes 1312 for providing femtocells or picocells (i.e., cells having smaller coverage areas, smaller user capacity, and/or higher bandwidth compared to macrocells).

Any of the RAN nodes 1311 and 1312 can terminate the air interface protocol and can be the first point of contact for the UEs 1301 and 1302. In some embodiments, any of the RAN nodes 1311 and 1312 can fulfill various logical functions for the E-UTRAN 1310 including, but not limited to, radio network controller (RNC) functions such as radio bearer management, uplink and downlink dynamic radio resource management and data packet scheduling, and mobility management.

In accordance with some embodiments, the UEs 1301 and 1302 can be configured to communicate using Orthogonal Frequency-Division Multiplexing (OFDM) communication signals with each other or with any of the RAN nodes 1311 and 1312 over a multicarrier communication channel in accordance various communication techniques, such as an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 1311 and 1312 to the UEs 1301 and 1302, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this represents the smallest quantity of resources that currently can be allocated. There are several different physical downlink channels that are conveyed using such resource blocks.

The physical downlink shared channel (PDSCH) carries user data and higher-layer signaling to the UEs 1301 and 1302. The physical downlink control channel (PDCCH) carries information about the transport format and resource allocations related to the PDSCH channel, among other things. It also informs the UEs 1301 and 1302 about the transport format, resource allocation, and H-ARQ (Hybrid Automatic Repeat Request) information related to the uplink shared channel. Typically, downlink scheduling (assigning control and shared channel resource blocks to the UE 102 within a cell) is performed at any of the RAN nodes 1311 and 1312 based on channel quality information fed back from any of the UEs 1301 and 1302, and then the downlink resource assignment information is sent on the PDCCH used for (i.e., assigned to) each of the UEs 1301 and 1302.

The PDCCH uses control channel elements (CCEs) to convey the control information. Before being mapped to resource elements, the PDCCH complex-valued symbols are first organized into quadruplets, which are then permuted using a sub-block inter-leaver for rate matching. Each PDCCH is transmitted using one or more of these CCEs, where each CCE corresponds to nine sets of four physical resource elements known as resource element groups (REGs). Four Quadrature Phase Shift Keying (QPSK) symbols are mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

The E-UTRAN 1310 is shown to be communicatively coupled to a core network - in this embodiment, an Evolved Packet Core (EPC) network 1320 via an S1 interface 1313. In this embodiment, the S1 interface 1313 is split into two parts: the S1-U interface 1314, which carries traffic data between the RAN nodes 1311 and 1312 and the serving gateway (S-GW) 1322, and the S1-MME interface 1315, which is a signaling interface between the RAN nodes 1311 and 1312 and the mobility management entities (MMEs) 1321.

In this embodiment, the EPC network 1320 comprises the MMEs 1321, the S-GW 1322, the Packet Data Network (PDN) Gateway (P-GW) 1323, and a home subscriber server (HSS) 1324. The MMEs 1321 are similar in function to the control plane of legacy Serving General Packet Radio Service (GPRS) Support Nodes (SGSN). The MMEs 1321 manage mobility aspects in access such as gateway selection and tracking area list management. The HSS 1324 comprises a database for network users, including subscription-related information to support the network entities' handling of communication sessions. The EPC network 1320 may comprise one or several HSSs 1324, depending on the number of mobile subscribers, on the capacity of the equipment, on the organization of the network, etc. For example, the HSS 1324 can provide support for routing/roaming, authentication, authorization, naming/addressing resolution, location dependencies, etc.

The S-GW 1322 terminates the S1 interface 1313 towards the E-UTRAN 1310, and routes data packets between the E-UTRAN 1310 and the EPC network 1320. In addition, the S-GW 1322 may be a local mobility anchor point for inter-RAN node handovers and also may provide an anchor for inter-3GPP mobility. Other responsibilities may include lawful intercept, charging, and some policy enforcement.

The P-GW 1323 terminates an SGi interface toward a PDN. The P-GW 1323 routes data packets between the EPC network 1323 and external networks such as a network including the application server 1330 (alternatively referred to as application function (AF)) via an Internet Protocol (IP) interface 1325. Generally, the application server 1330 is an element offering applications that use IP bearer resources with the core network (e.g., UMTS Packet Services (PS) domain, LTE PS data services, etc.). In this embodiment, the P-GW 1323 is shown to be communicatively coupled to an application server 1330 via an IP communications interface 1325. The application server 1330 can also be configured to support one or more communication services (e.g., Voice-over-Internet Protocol (VoIP) sessions, PTT sessions, group communication sessions, social networking services, etc.) for the UEs 1301 and 1302 via the EPC network 1320.

The P-GW 1323 may further be a node for policy enforcement and charging data collection. Policy and Charging Enforcement Function (PCRF) 1326 is the policy and charging control element of the EPC network 1320. In a non-roaming scenario, there may be a single PCRF in the Home Public Land Mobile Network (HPLMN) associated with a User Equipment's (UE) Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1326 may be communicatively coupled to the application server 1330 via the P-GW 1323. The application server 1330 may signal the PCRF 1326 to indicate a new service flow and selecting the appropriate Quality of Service (QoS) and charging parameters. The PCRF 1326 may provision this rule into a Policy and Charging Enforcement Function (PCEF) (not shown) with the appropriate traffic flow template (TFT) and QoS class of identifier (QCI), which commences the QoS and charging as specified by the application server.

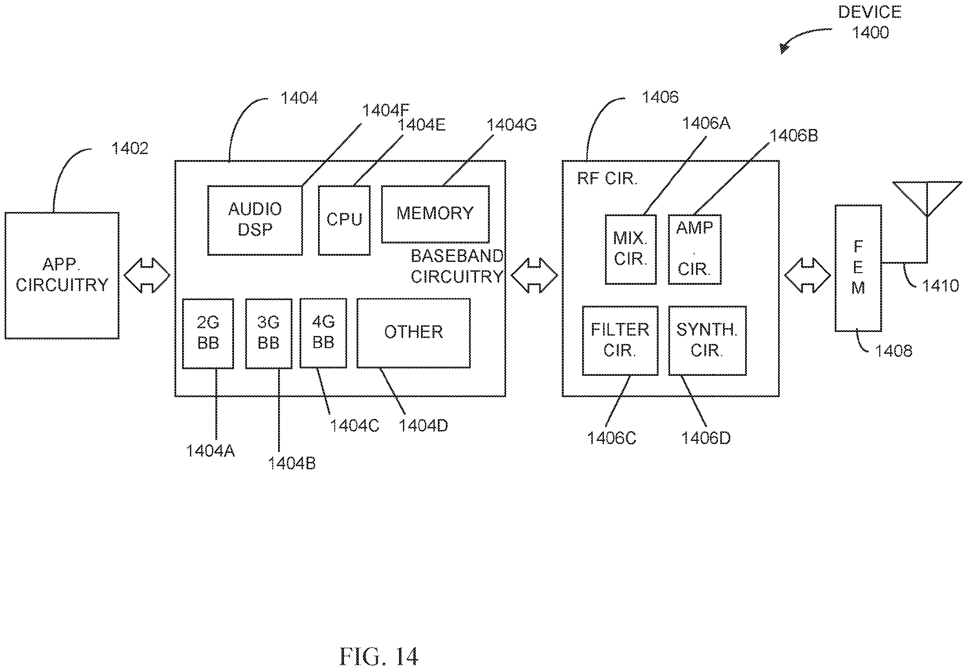

FIG. 14 illustrates example components of a device in accordance with some embodiments. In some embodiments, the device 1400 may include application circuitry 1402, baseband circuitry 1404, Radio Frequency (RF) circuitry 1406, front-end module (FEM) circuitry 1408, and one or more antennas 1410, coupled together at least as shown. The components of the illustrated device 1400 may be included in a UE or a RAN node. In some embodiments, the device 1400 may include less elements (e.g., a RAN node may not utilize application circuitry 1402, and instead include a processor/controller to process IP data received from an EPC). In some embodiments, the device 1400 may include additional elements such as, for example, memory/storage, display, camera, sensor, and/or input/output (I/O) interface. In other embodiments, the components described below may be included in more than one device (e.g., said circuitries may be separately included in more than one device for Cloud-RAN (C-RAN) implementations).

The application circuitry 1402 may include one or more application processors. For example, the application circuitry 1402 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system. In some embodiments, processors of application circuitry 1402 may process IP data packets received from an EPC.

The baseband circuitry 1404 may include circuitry such as, but not limited to, one or more single-core or multi-core processors. The baseband circuitry 1404 may include one or more baseband processors and/or control logic to process baseband signals received from a receive signal path of the RF circuitry 1406 and to generate baseband signals for a transmit signal path of the RF circuitry 1406. Baseband processing circuity 1404 may interface with the application circuitry 1402 for generation and processing of the baseband signals and for controlling operations of the RF circuitry 1406. For example, in some embodiments, the baseband circuitry 1404 may include a second generation (2G) baseband processor 1404a, third generation (3G) baseband processor 1404b, fourth generation (4G) baseband processor 1404c, and/or other baseband processor(s) 1404d for other existing generations, generations in development or to be developed in the future (e.g., fifth generation (5G), 6G, etc.). The baseband circuitry 1404 (e.g., one or more of baseband processors 1404a-d) may handle various radio control functions that enable communication with one or more radio networks via the RF circuitry 1406. In other embodiments, some or all of the functionality of baseband processors 1404a-d may be included in modules stored in the memory 1404g and executed via a Central Processing Unit (CPU) 1404e. The radio control functions may include, but are not limited to, signal modulation/demodulation, encoding/decoding, radio frequency shifting, etc. In some embodiments, modulation/demodulation circuitry of the baseband circuitry 1404 may include Fast-Fourier Transform (FFT), precoding, and/or constellation mapping/demapping functionality. In some embodiments, encoding/decoding circuitry of the baseband circuitry 1404 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry may include one or more audio digital signal processor(s) (DSP) 1404f. The audio DSP(s) 1404f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1404 and the application circuitry 1402 may be implemented together such as, for example, on a system on a chip (SOC).

In some embodiments, the baseband circuitry 1404 may provide for communication compatible with one or more radio technologies. For example, in some embodiments, the baseband circuitry 1404 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1404 is configured to support radio communications of more than one wireless protocol may be referred to as multi-mode baseband circuitry.

RF circuitry 1406 may enable communication with wireless networks using modulated electromagnetic radiation through a non-solid medium. In various embodiments, the RF circuitry 1406 may include switches, filters, amplifiers, etc. to facilitate the communication with the wireless network. RF circuitry 1406 may include a receive signal path which may include circuitry to down-convert RF signals received from the FEM circuitry 1408 and provide baseband signals to the baseband circuitry 1404. RF circuitry 1406 may also include a transmit signal path which may include circuitry to up-convert baseband signals provided by the baseband circuitry 1404 and provide RF output signals to the FEM circuitry 1408 for transmission.

In some embodiments, the RF circuitry 1406 may include a receive signal path and a transmit signal path. The receive signal path of the RF circuitry 1406 may include mixer circuitry 1406a, amplifier circuitry 1406b and filter circuitry 1406c. The transmit signal path of the RF circuitry 1406 may include filter circuitry 1406c and mixer circuitry 1406a. RF circuitry 1406 may also include synthesizer circuitry 1406d for synthesizing a frequency for use by the mixer circuitry 1406a of the receive signal path and the transmit signal path. In some embodiments, the mixer circuitry 1406a of the receive signal path may be configured to down-convert RF signals received from the FEM circuitry 1408 based on the synthesized frequency provided by synthesizer circuitry 1406d. The amplifier circuitry 1406b may be configured to amplify the down-converted signals and the filter circuitry 1406c may be a low-pass filter (LPF) or band-pass filter (BPF) configured to remove unwanted signals from the down-converted signals to generate output baseband signals. Output baseband signals may be provided to the baseband circuitry 1404 for further processing. In some embodiments, the output baseband signals may be zero-frequency baseband signals, although this is not a requirement. In some embodiments, mixer circuitry 1406a of the receive signal path may comprise passive mixers, although the scope of the embodiments is not limited in this respect.

In some embodiments, the mixer circuitry 1406a of the transmit signal path may be configured to up-convert input baseband signals based on the synthesized frequency provided by the synthesizer circuitry 1406d to generate RF output signals for the FEM circuitry 1408. The baseband signals may be provided by the baseband circuitry 1404 and may be filtered by filter circuitry 1406c. The filter circuitry 1406c may include a low-pass filter (LPF), although the scope of the embodiments is not limited in this respect.

In some embodiments, the mixer circuitry 1406a of the receive signal path and the mixer circuitry 1406a of the transmit signal path may include two or more mixers and may be arranged for quadrature downconversion and/or upconversion respectively. In some embodiments, the mixer circuitry 1406a of the receive signal path and the mixer circuitry 1406a of the transmit signal path may include two or more mixers and may be arranged for image rejection (e.g., Hartley image rejection). In some embodiments, the mixer circuitry 1406a of the receive signal path and the mixer circuitry 1406a may be arranged for direct downconversion and/or direct upconversion, respectively. In some embodiments, the mixer circuitry 1406a of the receive signal path and the mixer circuitry 1406a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1406 may include analog-to-digital converter (ADC) and digital-to-analog converter (DAC) circuitry and the baseband circuitry 1404 may include a digital baseband interface to communicate with the RF circuitry 1406.

In some dual-mode embodiments, a separate radio IC circuitry may be provided for processing signals for each spectrum, although the scope of the embodiments is not limited in this respect.

In some embodiments, the synthesizer circuitry 1406d may be a fractional-N synthesizer or a fractional N/N+1 synthesizer, although the scope of the embodiments is not limited in this respect as other types of frequency synthesizers may be suitable. For example, synthesizer circuitry 1406d may be a delta-sigma synthesizer, a frequency multiplier, or a synthesizer comprising a phase-locked loop with a frequency divider.

The synthesizer circuitry 1406d may be configured to synthesize an output frequency for use by the mixer circuitry 1406a of the RF circuitry 1406 based on a frequency input and a divider control input. In some embodiments, the synthesizer circuitry 1406d may be a fractional N/N+1 synthesizer.

In some embodiments, frequency input may be provided by a voltage controlled oscillator (VCO), although that is not a requirement. Divider control input may be provided by either the baseband circuitry 1404 or the applications processor 1402 depending on the desired output frequency. In some embodiments, a divider control input (e.g., N) may be determined from a look-up table based on a channel indicated by the applications processor 1402.

Synthesizer circuitry 1406d of the RF circuitry 1406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1406 may include an IQ/polar converter.

FEM circuitry 1408 may include a receive signal path which may include circuitry configured to operate on RF signals received from one or more antennas 1410, amplify the received signals and provide the amplified versions of the received signals to the RF circuitry 1406 for further processing. FEM circuitry 1408 may also include a transmit signal path which may include circuitry configured to amplify signals for transmission provided by the RF circuitry 1406 for transmission by one or more of the one or more antennas 1410.

In some embodiments, the FEM circuitry 1408 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1406). The transmit signal path of the FEM circuitry 1408 may include a power amplifier (PA) to amplify input RF signals (e.g., provided by RF circuitry 1406), and one or more filters to generate RF signals for subsequent transmission (e.g., by one or more of the one or more antennas 1410.

In some embodiments, the device 1400 comprises a plurality of power saving mechanisms. If the device 1400 is in an RRC_Connected state, where it is still connected to the RAN node as it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the device 1400 may transition off to an RRC_Idle state, where it disconnects from the network and does not perform operations such as channel quality feedback, handover, etc. The device 1400 goes into a very low power state and it performs paging where again it periodically wakes up to listen to the network and then powers down again. The device cannot receive data in this state, in order to receive data, it must transition back to RRC _Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1402 and processors of the baseband circuitry 1404 may be used to execute elements of one or more instances of a protocol stack. For example, processors of the baseband circuitry 1404, alone or in combination, may be used execute Layer 3, Layer 2, and/or Layer 1 functionality, while processors of the application circuitry 1404 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

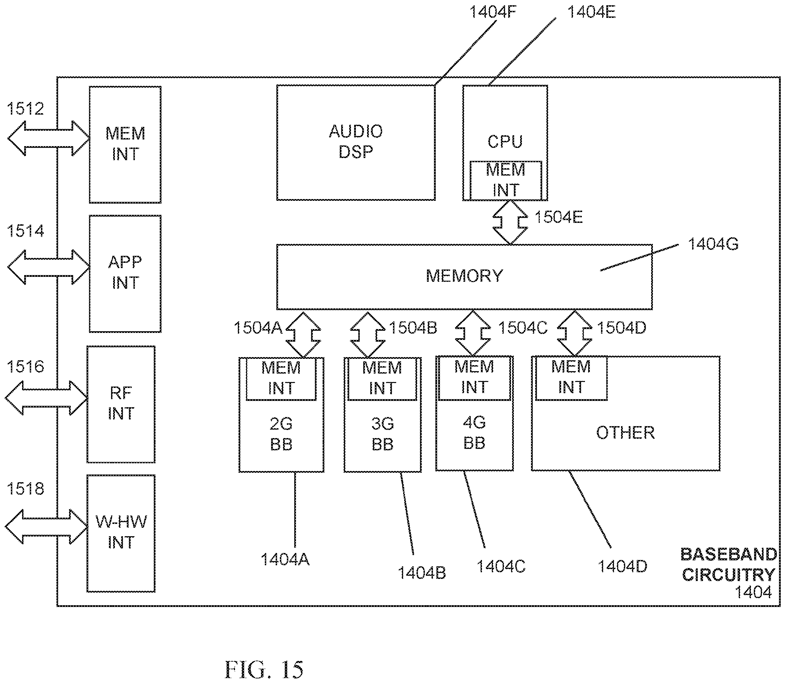

FIG. 15 illustrates example interfaces of baseband circuitry in accordance with some embodiments. As discussed above, the baseband circuitry 1404 of FIG. 14 may comprise processors 1404A-1404E and a memory 1404G utilized by said processors. Each of the processors 1404A-1404E may include a memory interface, 1504A-1504E, respectively, to send/receive data to/from the memory 1404G.

The baseband circuitry 1404 may further include one or more interfaces to communicatively couple to other circuitries/devices, such as a memory interface 1512 (e.g., an interface to send/receive data to/from memory external to the baseband circuitry 1404), an application circuitry interface 1514 (e.g., an interface to send/receive data to/from the application circuitry 1402 of FIG. 14), an RF circuitry interface 1516 (e.g., an interface to send/receive data to/from RF circuitry 1406 of FIG. 14), and a wireless hardware connectivity interface 1518 (e.g., an interface to send/receive data to/from Near Field Communication (NFC) components, Bluetooth® components (e.g., Bluetooth® Low Energy), Wi-Fi® components, and other communication components).

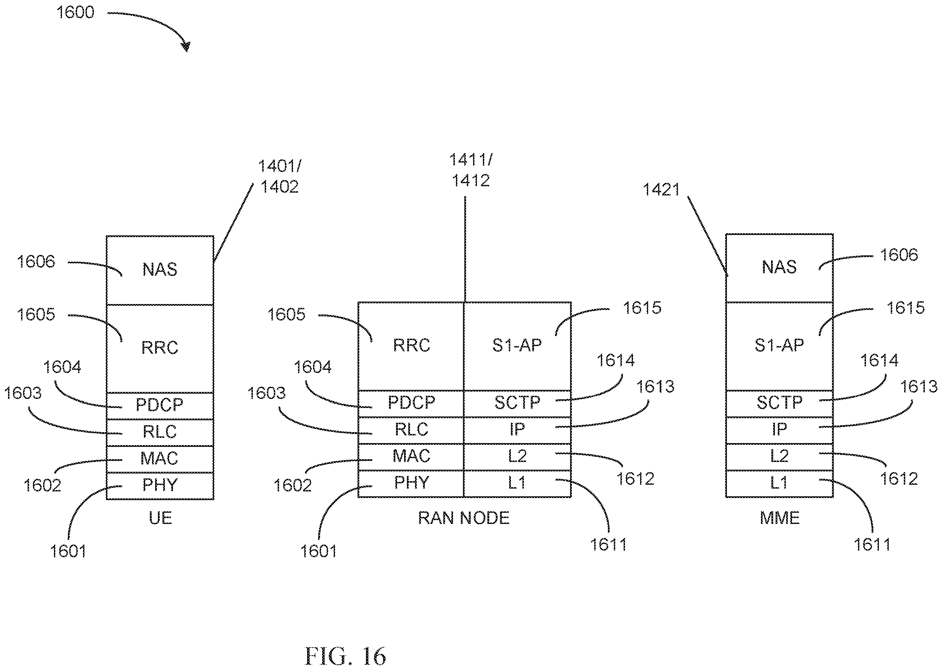

FIG. 16 is an illustration of a control plane protocol stack in accordance with some embodiments. In this embodiment, a control plane 1600 is shown as a communications protocol stack between the UE 1301 (or alternatively, the UE 1302), the RAN node 1311 (or alternatively, the RAN node 1312) and the MME 1321.

The PHY layer 1601 transmits and/or receives information used by the MAC layer 1602 over one or more air interfaces. The PHY layer 1601 may further perform link adaptation or adaptive modulation and coding (AMC), power control, cell search (e.g., for initial synchronization and handover purposes) and other measurements used by higher layers, such as the RRC layer 1605, error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 1602 performs mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 1603 may operate in a plurality of modes of operation, including: Transparent Mode (TM), Unacknowledged Mode (UM), and Acknowledged Mode (AM). The RLC layer 1603 may execute transfer of upper layer protocol data units (PDUs), error correction through automatic repeat request (ARQ) for AM data transfers, and concatenation, segmentation and reassembly of RLC SDUs for UM and AM data transfers. The RLC layer 1603 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 1604 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, ciphering and deciphering of control plane data, integrity protection and integrity verification of control plane data, timer based discard of data, and security (e.g., ciphering, deciphering, integrity protection, integrity verification, etc.).

The main services and functions of the RRC layer 1605 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 1301 and the RAN node 1311 may utilize a Uu interface (e.g., an LTE-Uu interface) to exchange control plane data via a protocol stack comprising the PHY layer 1601, the MAC layer 1602, the RLC layer 1603, the PDCP layer 1604, and the RRC layer 1605.

The non-access stratum (NAS) protocols 1606 form the highest stratum of the control plane between the UE 1301 and the MME 1321. The NAS protocols 1606 support the mobility of the UE 1301 and the session management procedures to establish and maintain IP connectivity between the UE 1301 and the P-GW 1323.

The S1 Application Protocol (S1-AP) layer 1615 supports the functions of the S1 interface and comprises Elementary Procedures (EPs). An EP is a unit of interaction between the RAN node 1311 and the EPC 1320. The S1-AP layer services comprise two groups: UE-associated services and non UE-associated services. These services perform functions including, but are not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) 1614 ensures reliable delivery of signaling messages between the RAN node 1311 and the MME 1321 based, in part, on the IP protocol, supported by the IP layer 1613. The L2 layer 1612 and the L1 layer 1611 refers to communication links (e.g., wired or wireless) used by the RAN node and the MME to exchange information.

The RAN node 1311 and the MME 1321 may utilize an S1-MME interface to exchange control plane data via a protocol stack comprising the L1 layer 1611, the L2 layer 1612, the IP layer 1613, the SCTP layer 1614, and the S1-AP layer 1615.

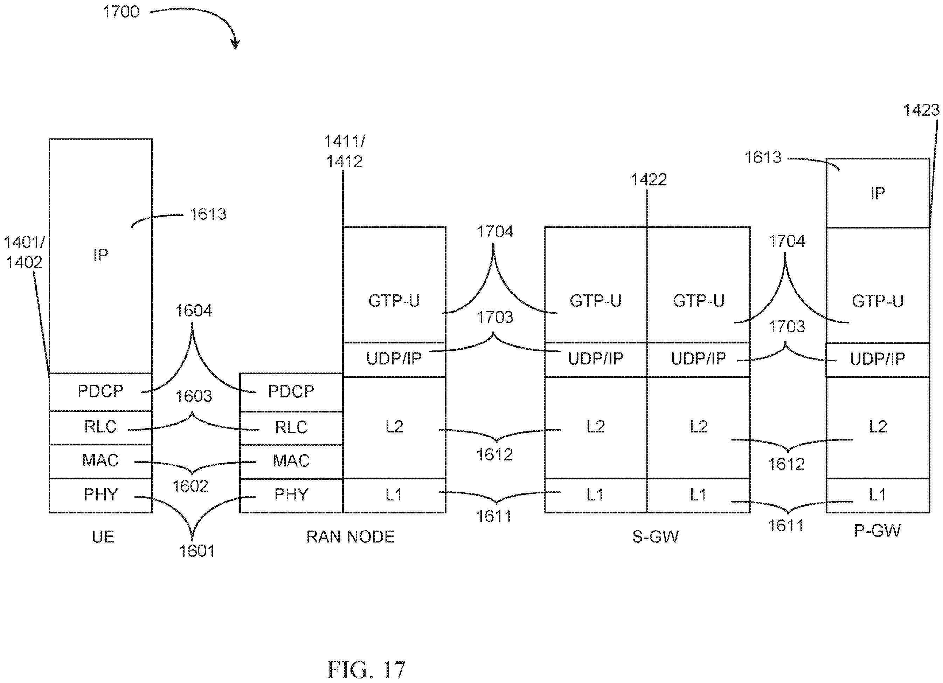

FIG. 17 is an illustration of a user plane protocol stack in accordance with some embodiments. In this embodiment, a user plane 1700 is shown as a communications protocol stack between the UE 1301 (or alternatively, the UE 1302), the RAN node 1311 (or alternatively, the RAN node 1312), the S-GW 1322, and the P-GW 1323. The user plane 1700 may utilize at least some of the same protocol layers as the control plane 1600. For example, the UE 1301 and the RAN node 1311 may utilize a Uu interface (e.g., an LTE-Uu interface) to exchange user plane data via a protocol stack comprising the PHY layer 1601, the MAC layer 1602, the RLC layer 1603, the PDCP layer 1604.

The General Packet Radio Service (GPRS) Tunneling Protocol for the user plane (GTP-U) layer 1704 may be used for carrying user data within the GPRS core network and between the radio access network and the core network. The user data transported can be packets in any of IPv4, IPv6, or PPP formats. The UDP and IP security (UDP/IP) layer 1703 may provide checksums for data integrity, port numbers for addressing different functions at the source and destination, and encryption and authentication on the selected data flows. The RAN node 1311 and the S-GW 1322 may utilize an S1-U interface to exchange user plane data via a protocol stack comprising the L1 layer 1611, the L2 layer 1612, the UDP/IP layer 1703, and the GTP-U layer 1704. The S-GW 1322 and the P-GW 1323 may utilize an S5/S8a interface to exchange user plane data via a protocol stack comprising the L1 layer 1611, the L2 layer 1612, the UDP/IP layer 1703, and the GTP-U layer 1704. As discussed above with respect to FIG. 16, NAS protocols support the mobility of the UE 1301 and the session management procedures to establish and maintain IP connectivity between the UE 1301 and the P-GW 1323.

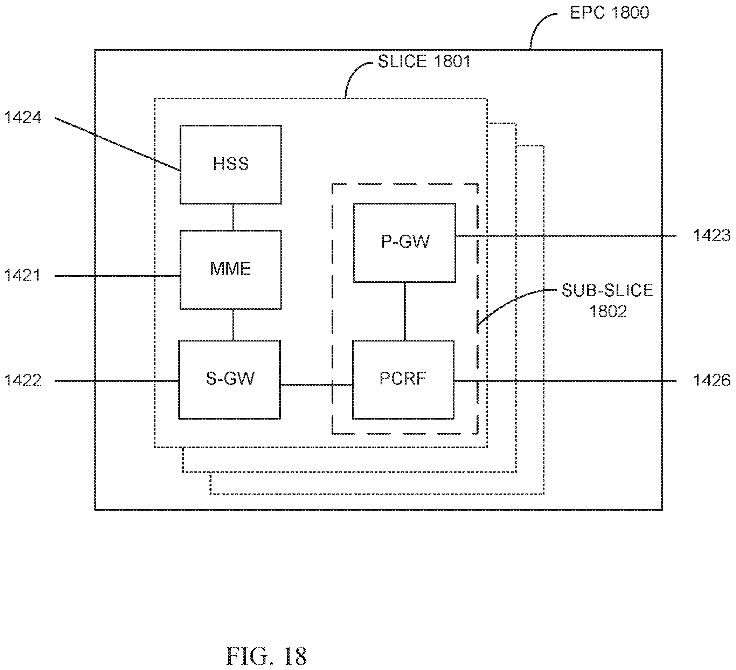

FIG. 18 illustrates components of a core network in accordance with some embodiments. The components of the EPC 1320 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the EPC network 1320 may be referred to as a network slice 1801. A logical instantiation of a portion of the EPC network 1320 may be referred to as a network sub-slice Y02 (e.g., the network sub-slice Y02 is shown to include the PGW 1323 and the PCRF 1326).

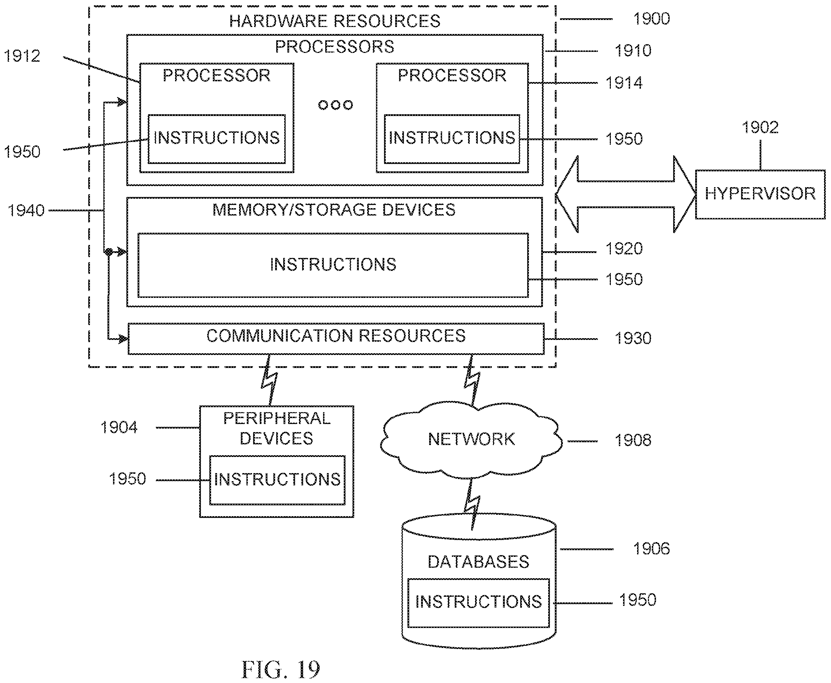

FIG. 19 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 19 shows a diagrammatic representation of hardware resources 1900 including one or more processors (or processor cores) 1910, one or more memory/storage devices 1920, and one or more communication resources 1930, each of which are communicatively coupled via a bus 1940. For embodiments where node virtualization (e.g., NFV) is utilized, a hypervisor 1902 may be executed to provide an execution environment for one or more network slices/sub-slices to utilize the hardware resources 1900

The processors 1910 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1912 and a processor 1914. The memory/storage devices 1920 may include main memory, disk storage, or any suitable combination thereof.

The communication resources 1930 may include interconnection and/or network interface components or other suitable devices to communicate with one or more peripheral devices 1904 and/or one or more databases 1906 via a network 1908. For example, the communication resources 1930 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions 1950 may comprise software, a program, an application, an applet, an app, or other executable code for causing at least any of the processors 1910 to perform any one or more of the methodologies discussed herein. The instructions 1950 may reside, completely or partially, within at least one of the processors 1910 (e.g., within the processor's cache memory), the memory/storage devices 1920, or any suitable combination thereof. Furthermore, any portion of the instructions 1950 may be transferred to the hardware resources 1900 from any combination of the peripheral devices 1904 and/or the databases 1906. Accordingly, the memory of processors 1910, the memory/storage devices 1920, the peripheral devices 1904, and the databases 1906 are examples of computer-readable and machine-readable media.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some aspects, the circuitry may be implemented in, or functions associated with the circuitry may be implemented by, one or more software or firmware modules. In some aspects, circuitry may include logic, at least partially operable in hardware.

Various techniques, or certain aspects or portions thereof, may take the form of program code (i.e., instructions) embodied in tangible media, such as floppy diskettes, compact disc-read-only memory (CD-ROMs), hard drives, transitory or non-transitory computer readable storage medium, or any other machine-readable storage medium wherein, when the program code is loaded into and executed by a machine, such as a computer, the machine becomes an apparatus for practicing the various techniques. Circuitry may include hardware, firmware, program code, executable code, computer instructions, and/or software. A non-transitory computer readable storage medium may be a computer readable storage medium that does not include signal. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired In any case, the language may be a compiled or interpreted language, and combined with hardware implementations.

As used herein, the term processor may include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module cannot be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as de facto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology may be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation may be made without the exercise of inventive faculty. Accordingly, it is not intended that the technology be limited, except as by the claims set forth below.

**Claims**

1. An apparatus of a User Equipment, UE, (120), operable to support variable size buffer status reports, BSR, format comprising:

   one or more processors (432) being configured to:

   identify one or more of a plurality of priority classes to be reported and a corresponding buffer size for each of the one or more of the priority classes; and
   encode a priority class bitmap field (605) comprising a plurality N of contiguous bits, wherein each bit of the priority class bitmap field (605) corresponding to a respective one of the plurality N of priority classes, and the buffer sizes for the one or more of the plurality of priority classes in one or more corresponding buffer size fields, of a BSR for transmission to a Base Station, BS, (110), wherein each bit of the priority class bitmap field set (605) to a first state indicates that the buffer size field for the corresponding one of the one or more of the plurality of priority classes is included in the BSR, and wherein each bit of the priority class bitmap field (605) set to a second state indicates that the buffer size field for the corresponding one of the one or more of the plurality of priority classes is not included in the BSR; and

   a memory interface configured to send to a memory the BSR.

2. The apparatus of claim 1, wherein a size of the BSR is based on a number of bits of the priority class bitmap field (605) set to the first state.

3. The apparatus of claim 1, wherein:
   the plurality of priority classes comprise a plurality of logical channel groups, LCG; and
   the priority class bitmap field (605) comprises a LCG bitmap field.

4. A Base Station, BS, (110), operable to support variable size buffer status reports, BSR, format comprising:

   one or more processors (462) being configured to:

   decode a priority class bitmap field (605) comprising a plurality N of contiguous bits, wherein each bit of the priority class bitmap field (605) corresponding to a respective one of the plurality N of priority classes, and one or more corresponding buffer size fields of a BSR received from a User Equipment, UE, (120), wherein each bit of the priority class bitmap field set (605) to a first state indicates that the buffer size field for the corresponding one of the one or more of the plurality of priority classes is included in the BSR, and wherein each bit of the priority class bitmap field (605) set to a second state indicates that the buffer size field for the corresponding one of the one or more of the plurality of priority classes is not included in the BSR; and

determine one or more of the plurality of priority classes and corresponding buffer size from the priority class bitmap field (605) and the one or more corresponding buffer size fields; and

configure the BS to grant resources for transmission of data for the one or more of the plurality of priority classes based on the corresponding buffer size of each of the one or more of the plurality of priority classes; and

a memory interface configured to send to a memory the BSR.

5. The base station (120) of claim 4, wherein a size of the BSR is based on a number of bits of the priority class bitmap field (605) set to the first state.

6. The base station (120) of claim 4, wherein the one or more processors (462) are further configured to:

identify a mapping of a plurality of radio bearers to a corresponding Quality of Service, QoS, class, a corresponding priority class and a corresponding buffer size for each corresponding one of the plurality of radio bearers; and

determine the radio bearer or the QoS class corresponding to the one or more of the plurality of priority classes from the mapping; and

configure the BS to for each of the one or more of the plurality of priority classes further based on the radio bearer or the QoS class.

7. The base station (120) of claim 4, wherein:

the plurality of priority classes comprise a plurality of logical channel groups, LCG; and
the priority class bitmap field (605) comprises a LCG bitmap field.

**Patentansprüche**

1. Vorrichtung eines Benutzergeräts, UE, (120), die betreibbar ist, um ein Pufferstatusberichte-, BSR,-Format mit variabler Größe zu unterstützen, umfassend:

einen oder mehrere Prozessoren (432), die konfiguriert sind zum:

Identifizieren einer oder mehrerer einer Vielzahl von zu meldenden Prioritätsklassen und einer entsprechenden Puffergröße für jede der einen oder mehreren der Prioritätsklassen; und

Codieren eines Prioritätsklassen-Bitmapfelds (605), das eine Vielzahl N von zusammenhängenden Bits umfasst, wobei jedes Bit des Prioritätsklassen-Bitmapfelds (605) einer jeweiligen der Vielzahl N von Prioritätsklassen entspricht und der Puffergrößen für die eine oder mehreren der Vielzahl von Prioritätsklassen in einem oder mehreren entsprechenden Puffergrößenfeldern eines BSR zur Übertragung an eine Basisstation, BS, (110), wobei jedes Bit des Prioritätsklassen-Bitmapfelds (605), das auf einen ersten Zustand gesetzt ist, angibt, dass das Puffergrößenfeld für die entsprechende der einen oder mehreren der Vielzahl von Prioritätsklassen in dem BSR enthalten ist, und wobei jedes Bit des Prioritätsklassen-Bitmapfelds (605), das auf einen zweiten Zustand gesetzt ist, angibt, dass das Puffergrößenfeld für die entsprechende der einen oder mehreren der Vielzahl von Prioritätsklassen nicht in dem BSR enthalten ist; und

eine Speicherschnittstelle, die konfiguriert ist, um den BSR an einen Speicher zu senden.

2. Vorrichtung nach Anspruch 1, wobei eine Größe des BSR auf einer Anzahl von Bits des Prioritätsklassen-Bitmapfelds (605) basiert, das auf den ersten Zustand eingestellt ist.

3. Vorrichtung nach Anspruch 1, wobei:
die Vielzahl von Prioritätsklassen eine Vielzahl von logischen Kanalgruppen, LCG, umfasst; und
das Prioritätsklassen-Bitmapfeld (605) ein LCG-Bitmapfeld umfasst.

4. Basisstation, BS, (110), die betreibbar ist, um ein Pufferstatusberichte-, BSR,-Format mit variabler Größe zu unterstützen, umfassend:

einen oder mehrere Prozessoren (462), die konfiguriert sind zum:

Decodieren eines Prioritätsklassen-Bitmapfelds (605), das eine Vielzahl N von zusammenhängenden Bits umfasst, wobei jedes Bit des Prioritätsklassen-Bitmapfelds (605) einer jeweiligen der Vielzahl N von Prioritätsklassen entspricht, und eines oder mehrerer entsprechender Puffergrößenfelder eines BSR, der von einem Benutzergerät, UE, (120) empfangen wird, wobei jedes Bit des Prioritätsklassen-Bitmapfelds (605), das auf einen ersten Zustand gesetzt ist, angibt, dass das Puffergrößenfeld für die entsprechende der einen oder mehreren der Vielzahl von Prioritätsklassen in dem BSR enthalten ist, und wobei jedes Bit des Prioritätsklassen-Bitmapfelds (605), das auf einen zweiten Zustand gesetzt ist, angibt, dass das Puffergrößenfeld für die entsprechende der einen oder mehreren der Vielzahl von Prioritätsklassen nicht in dem BSR enthalten ist; und

Bestimmen einer oder mehrerer der Vielzahl von Prioritätsklassen und einer entsprechenden Puffergröße aus dem Prioritätsklassen-Bitmapfeld (605) und dem einen oder den mehreren entsprechenden Puffergrößenfeldern; und

Konfigurieren der BS, um Ressourcen zur Übertragung von Daten für die eine oder mehreren der Vielzahl von Prioritätsklassen basierend auf der entsprechenden Puffergröße jeder der einen oder mehreren der Vielzahl von Prioritätsklassen zu gewähren; und

eine Speicherschnittstelle, die konfiguriert ist, um den BSR an einen Speicher zu senden.

5. Basisstation (120) nach Anspruch 4, wobei eine Größe des BSR auf einer Anzahl von Bits des Prioritätsklassen-Bitmapfelds (605) basiert, das auf den ersten Zustand eingestellt ist.

6. Basisstation (120) nach Anspruch 4, wobei der eine oder die mehreren Prozessoren (462) ferner konfiguriert sind zum:

Identifizieren einer Zuordnung einer Vielzahl von Funkträgern zu einer entsprechenden Dienstqualitäts-, QoS,-Klasse, einer entsprechenden Prioritätsklasse und einer entsprechenden Puffergröße für jeden entsprechenden der Vielzahl von Funkträgern; und

Bestimmen des Funkträgers oder der QoS-Klasse entsprechend der einen oder den mehreren der Vielzahl von Prioritätsklassen aus der Zuordnung; und

Konfigurieren der BS für jede der einen oder mehreren der Vielzahl von Prioritätsklassen ferner basierend auf dem Funkträger oder der QoS-Klasse.

7. Basisstation (120) nach Anspruch 4, wobei:

die Vielzahl von Prioritätsklassen eine Vielzahl von logischen Kanalgruppen, LCG, umfasst; und
das Prioritätsklassen-Bitmapfeld (605) ein LCG-Bitmapfeld umfasst.

**Revendications**

1. Un appareil d'un équipement utilisateur, UE (120), fonctionnel pour prendre en charge un format de notifications de statut de tampon de taille variable, BSR, comprenant :
un ou plusieurs processeurs (432) configurés pour :

identifier une ou plusieurs d'une pluralité de classes de priorité à notifier, et une taille de tampon correspondante pour chacune des une ou plusieurs des classes de priorité ; et
coder un champ de bitmap de classes de priorité (605) comprenant une pluralité de N bits contigus, chaque bit du champ de bitmap de classes de priorité (605) correspondant à l'une respective de la pluralité de N classes de priorité, et les tailles de tampon pour les une ou plusieurs de la pluralité de classes de priorité dans un ou plusieurs champs de taille de tampon correspondante, d'une BSR à transmettre à une station de base, BS (110), où chaque bit du champ de bitmap de classes de priorité (605) positionné à un premier état indique que le champ de taille de tampon pour la classe correspondante des une ou plusieurs de la pluralité de classes de priorité est inclus dans la BSR, et où chaque bit du champ de bitmap de classes de priorité (605) positionné à un second état indique que le champ de taille de tampon pour la classe correspondante des une ou plusieurs de la pluralité de

classes de priorité n'est pas inclus dans la BSR ; et une interface mémoire configurée pour envoyer la BSR à une mémoire.

**2.** L'appareil de la revendication 1, dans lequel une taille de la BSR est basée sur un nombre de bits du champ de bitmap de classes de priorité (605) qui sont positionnés au premier état.

**3.** L'appareil de la revendication 1, dans lequel :

la pluralité de classes de priorité comprend une pluralité de groupes de canaux logiques, LCG ; et
le champ de bitmap de classes de priorité (605) comprend un champ de bitmap de LCG.

**4.** Une station de base, BS (110), fonctionnelle pour prendre en charge un format de notifications de statut de tampon de taille variable, BSR, comprenant :

un ou plusieurs processeurs (462) qui sont configurés pour :

décoder un champ de bitmap de classes de priorité (605) comprenant une pluralité de N bits contigus, chaque bit du champ de bitmap de classes de priorité (605) correspondant à l'une respective de la pluralité de N classes de priorité, et un ou plusieurs champs de taille de tampon correspondante d'une BSR reçue en provenance d'un équipement utilisateur, UE (120), où chaque bit du champ de bitmap de classes de priorité (605) qui est positionné à un premier état indique que le champ de taille de tampon pour la classe correspondante des une ou plusieurs de la pluralité de classes de priorité est inclus dans la BSR, et où chaque bit du champ de bitmap de classes de priorité (605) qui est positionné à un second état indique que le champ de taille de tampon pour la classe correspondante des une ou plusieurs de la pluralité de classes de priorité n'est pas inclus dans la BSR ; et déterminer une ou plusieurs de la pluralité de classes de priorité et la taille de tampon correspondante à partir du champ de bitmap de classes de priorité (605) et des un ou plusieurs champs de taille de tampon correspondante ; et
configurer la BS pour accorder des ressources pour la transmission de données pour les une ou plusieurs de la pluralité de classes de priorité sur la base de la taille de tampon correspondante de chaque classe des une ou plusieurs de la pluralité de classes de priorité ; et

une interface mémoire configurée pour envoyer la BSR à une mémoire.

**5.** La station de base (120) de la revendication 4, dans laquelle une taille de la BSR est basée sur un nombre de bits du champ de bitmap de classes de priorité (605) qui sont positionnés au premier état.

**6.** La station de base (120) de la revendication 4, dans laquelle les un ou plusieurs processeurs (462) sont en outre configurés pour :

identifier un mappage d'une pluralité de bearers radio vers une classe correspondante de qualité de service, QoS, une classe de priorité correspondante, et une taille de tampon correspondante pour chaque bearer correspondant de la pluralité de bearers radio ; et
déterminer à partir du mappage le bearer radio ou la classe QoS correspondant auxdites une ou plusieurs de la pluralité de classes de priorité ; et
configurer la BS pour chaque classe des une ou plusieurs de la pluralité de classes de priorité, en outre sur la base du bearer radio ou de la classe QoS.

**7.** La station de base (120) de la revendication 4, dans laquelle :

la pluralité de classes de priorité comprend une pluralité de groupes de canaux logiques, LCG ; et
le champ de bitmap de classes de priorité (605) comprend un champ de bitmap de LCG.

100

WIRELESS
NETWORK
130

UE
120

BS
110

FIG. 1

| LCG ID | Buffer Size |
|---|---|

210          FIG. 2A          220

| Buffer Size #0 | Buffer Size #1 |
|---|---|

230

| Buffer Size #1 | Buffer Size #2 |
|---|---|

240                                                   250

| Buffer Size #2 | Buffer Size #3 |
|---|---|

260

FIG. 2B

310

| Destination Index$_1$ | LCG ID$_1$ | Buffer Size$_1$ |
|---|---|---|
| Buffer Size$_1$ | | Destination Index$_2$ |
| LCG$_2$ | | Buffer Size$_2$ |

⋮

| Destination Index$_{N-1}$ | LCG ID$_{N-1}$ | Buffer Size$_{N-1}$ |
|---|---|---|
| Buffer Size$_{N-1}$ | | Destination Index$_N$ |
| LCG ID$_N$ | | Buffer Size$_N$ |

FIG. 3A

| Destination Index$_1$ | LCG ID$_1$ | Buffer Size$_1$ |
|---|---|---|
| Buffer Size$_1$ | | Destination Index$_2$ |
| LCG$_2$ | | Buffer Size$_2$ |

⋮

| Destination Index$_N$ | LCG ID$_N$ | | | Buffer Size$_N$ | |
|---|---|---|---|---|---|
| Buffer Size$_N$ | | R | R | R | R |

FIG. 3B

400

110

BS

440

Transceiver
Module

Memory 446

Processor(s) 444

Transceiver(s) 442

430

Processing
Module

Memory 434

Processor(s) 432

120

UE

450

Transceiver
Module

456 Memory

454 Processor(s)

452 Transceiver(s)

460

Processing
Module

464 Memory

462 Processor(s)

FIG. 4

UE

BS

510 — Identify one or more of a plurality of priority classes to be reported and a corresponding buffer size for each of the one or more of the plurality of priority classes

520 — Encode a priority class bitmap field, and the buffer sizes for the one or more of the plurality of priority classes in one or more corresponding buffer size fields, of a BSR for transmission to a BS

Decode a priority class bitmap field, and one or more corresponding buffer size fields of a BSR received from the UE — 530

Determine the one or more of the plurality of priority classes and the corresponding buffer size from the priority class bitmap field and the one or more corresponding buffer size fields — 540

Configure the BS to grant resources for transmission of data for one or more of the plurality of priority classes based on the corresponding buffer size of each of the one or more of the plurality of classes — 550

A

FIG. 5A

UE                                          BS

A

Identify a mapping of a a plurality of
QoSs, priority classes, buffer sizes
and optionally RBs.                          560

Optionally determine the radio bearer
or the QoS class corresponding to the       570
one or more of the plurality of
priority classes from the mapping

Configure the BS for each of the one        580
or more of the plurality of priority
classes further based on the radio
bearer or the QoS class

FIG. 5B

605  |  | Priority class bitmap field | |
610  |  | Buffer Size # i (R_i bits) | | Buffer Size # j
615  | Buffer Size # j (R_j bits) | Buffer Size # k (R_k bits)
620  | Buffer Size # k | Padding | 645

**FIG. 6A**

625          630   635          640

| 1 | 0 | 0 | 1 | 1 | 0 | 0 | 1 | OCT 1 |
| Buffer Size # 0 (R_0 = 6 bits) | | | | | Buffer Size # 3 | | | OCT 2 |
| Buffer Size # 3 (R_3 = 6 bits) | | | Buffer Size # 4 (R_4 = 6 bits) | | | OCT 3 |
| Buffer Size # 4 | | Buffer Size # 7 (R_7 = 6 bits) | | | | OCT 4 |

**FIG. 6B**

740          745

705 P=1 | Buffer Size # i | P=0 | 710

715
720 P=0 | P=1 | Buffer Size # j

725 P=1 | Buffer Size # k | P=0 | 730

735 ••• | P=1 | Buffer Size # N-1

750    755

## FIG. 7A

740

705 P=1 | Buffer Size # 0 ($R_0$ = 6 bits) | P=0 | 710 OCT 1

715 P=0 | P=1 | Buffer Size # 3 ($R_3$ = 6 bits) | OCT 2

P=1 | Buffer Size # 4 ($R_4$ = 6 bits) | P=0 | OCT 3

••• | P=1 | Buffer Size # 7 ($R_7$ = 6 bits) | OCT 4

## FIG. 7B

| Radio Bearer | QoS Class | LCID | Buffer Size Field |
|---|---|---|---|
| 840 | 810 | 820 | 830 |
| $RB_1$ | $QoS_1$ | 0 | $R_1$ bits |
| $RB_2$ | $QoS_2$ | 1 | $R_2$ bits |
| * * * | * * * | * * * | * * * |
| $RB_{N-1}$ | $QoS_{N-1}$ | N-2 | $R_{N-1}$ bits |
| $RB_N$ | $QoS_N$ | N-1 | $R_N$ bits |

FIG. 8A

| Radio Bearer | QoS Class | LCG ID | Buffer Size Field |
|---|---|---|---|
| $RB_1$ | $QoS_1$ | 0 | $R_1$ bits |
| $RB_2$ | $QoS_2$ | 1 | $R_2$ bits |
| * * * | * * * | * * * | * * * |
| $RB_{G-1}$ | $QoS_{G-1}$ | G-2 | $R_{G-1}$ bits |
| $RB_G$ | $QoS_G$ | G-1 | $R_G$ bits |

FIG. 8B

UE                                    BS

910 — Identify a priority class identifier of each of one or more of a plurality of priority classes to be reported, and a corresponding buffer size for each of the one or more of the priority classes

920 — Encode a number of the one or more of the plurality of priority classes in a number of priority classes report field, the priority class identifier of each of the one or more of the plurality of priority classes in one or more corresponding priority class identifier fields, and the corresponding buffer size for each of the one or more of the plurality of priority classes in one or more corresponding buffer size fields of a BSR for transmission to a BS

Decode a number of priority classes reported field, one or more priority class identifier fields, and one or more corresponding buffer size fields of a BSR received from a UE — 930

Determine the one or more of the plurality of priority class identifiers and the corresponding buffer size from the priority class identifier field and the one or more corresponding buffer size fields — 940

A

## FIG. 9A

UE                                                    BS

A

Configure the BS to grant resources
for transmission of data for the one
or more of the plurality of priority
classes based on the corresponding
buffer size of each of the one or more
of the plurality of priority class
identifiers                                           950

Identify a mapping of a a plurality of
QoSs, priority classes, buffer sizes
and optionally RBs.                                   960

Optionally determine the radio bearer
or the QoS class corresponding to the
one or more of the plurality of
priority classes from the mapping     970

Configure the BS for each of the one
or more of the plurality of priority
classes further based on the radio
bearer or the QoS class               980

FIG. 9B

| | | |
|---|---|---|
| # of Priority Classes M (x bit) | Priority Class ID # i (x bit) | Buffer Size # i |
| Buffer Size # i | Priority Class ID # j | |
| Buffer Size # j | * * * | Priority Class ID # k |
| Buffer Size # k | | Padd ing |

FIG. 10A

| | | | |
|---|---|---|---|
| # of LCIDs M = 3 (011) | LCID # 0 (000) | Buffer Size # 0 | OCT 1 |
| Buffer Size # 0 | LCID # 3 (011) | | OCT 2 |
| Buffer Size # 3 | * * * | LCID # 4 (100) | OCT 3 |
| Buffer Size # 4 | | Padd ing | OCT 4 |

FIG. 10B

UE                                                    BS

1110 — Identify a priority class identifier of each of one or more of a plurality of priority classes to be reported, and a corresponding buffer size for each of the one or more of the priority classes

1120 — Encode an extend bitmap field, the priority class identifier of each of the one or more of the plurality of priority classes in one or more corresponding priority class identifier fields, and the corresponding buffer size for each of the one or more of the plurality of priority classes in one or more corresponding buffer size fields of a BSR for transmission to a BS, wherein each bit of the extend bitmap field set to a first state indicates that another one of the one or more of the priority class identifier fields and another corresponding one of the one or more of the buffer size fields follows the given bit of the extend bitmap field

Decode an extended bitmap field, one or more priority class identifier fields, and one or more corresponding buffer size fields of a BSR received from a UE, wherein each bit of the extend bitmap field set to a first state indicates that another one of the one or more of the priority class identifier fields and another corresponding one of the one or more of the buffer size fields follows the given bit of the extend bitmap field — 1130

A

FIG. 11A

UE                                                      BS

A

Determine the one or more of the
plurality of priority class identifiers
and the corresponding buffer size
from the priority class identifier field
and the one or more corresponding
buffer size fields                                   1140

Configure the BS to grant resources
for transmission of data for the one
or more of the plurality of priority
classes based on the corresponding
buffer size of each of the one or more
of the plurality of priority class
identifiers                                          1150

Identify a mapping of a a plurality of
QoSs, priority classes, buffer sizes
and optionally RBs.                                  1160

Optionally determine the radio bearer
or the QoS class corresponding to the
one or more of the plurality of
priority classes from the mapping      1170

Configure the BS for each of the one
or more of the plurality of priority
classes further based on the radio
bearer or the QoS class                1180

FIG. 11B

FIG. 12A

FIG. 12B

FIG. 13

FIG. 14

EP 3 498 002 B1

FIG. 15

**FIG. 16**

FIG. 17

EP 3 498 002 B1

FIG. 18

FIG. 19

EP 3 498 002 B1

**EP 3 498 002 B1**

**REFERENCES CITED IN THE DESCRIPTION**

**Patent documents cited in the description**

- EP 3001755 A1
- WO 2010043963 A1
- WO 2009088334 A1